(19) Europäisches Patentamt
European Patent Office
Office européen des brevets

(11) EP 4 786 502 A1

(12) EUROPEAN PATENT APPLICATION

(43) Date of publication:
**05.08.2026 Bulletin 2026/32**

(21) Application number: **25154915.0**

(22) Date of filing: **30.01.2025**

(51) International Patent Classification (IPC):
***C08F 210/16*** $^{(2006.01)}$ ***C08F 4/659*** $^{(2006.01)}$
***C08L 23/0807*** $^{(2025.01)}$

(52) Cooperative Patent Classification (CPC):
(C-Sets available)
**C08F 210/16; C08L 23/0815;** C08F 4/65912;
C08F 4/65916; C08F 2420/07 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Borealis GmbH**
**1020 Vienna (AT)**

(72) Inventors:
- **BURYAK, Andrey**
**4021 Linz (AT)**
- **POMAKHINA, Elena**
**4021 Linz (AT)**

(74) Representative: **Maiwald GmbH**
**Elisenhof**
**Elisenstraße 3**
**80335 München (DE)**

# (54) MULTIMODAL POLYETHYLENE

(57) The present invention is directed to a multimodal polyethylene, to a process for producing said multimodal polyethylene, and to films comprising said multimodal polyethylene.

EP 4 786 502 A1

(52) Cooperative Patent Classification (CPC): (Cont.)

C-Sets
**C08F 210/16, C08F 2/001;**
**C08F 210/16, C08F 4/6492;**
**C08F 210/16, C08F 4/65927;**
**C08L 23/0815, C08L 23/0815;**
C08F 210/16, C08F 210/08, C08F 210/14, C08F 2500/12, C08F 2500/02, C08F 2500/04, C08F 2500/27, C08F 2500/26, C08F 2500/30, C08F 2500/31;
C08F 210/16, C08F 210/08, C08F 2500/12, C08F 2500/02, C08F 2500/04, C08F 2500/27;
C08F 210/16, C08F 210/08, C08F 2500/12, C08F 2500/27

## Description

### Field of the Invention

The present invention is directed to a multimodal polyethylene, to a process for producing said multimodal polyethylene, and to films comprising said multimodal polyethylene.

### Background to the Invention

Plastic packaging is widely used in daily life due to a favorable cost/performance ratio. Polyolefins are easy and economical to produce with good properties and are widely used in plastic packaging.

Polyethylene films display a particularly beneficial balance of properties, balancing mechanical and optical properties with good processability. That said, it is well understood in the art that high melt flow rates (i.e. low molecular weight) are required to avoid high melt pressure during the film extrusion step. High melt pressure can lead to increased energy consumption and wear on the extrusion equipment, as well as reduced throughput. Whilst these complications may be overcome by increasing the melt flow rate, increasing the melt flow rate has a deleterious effect on the mechanical properties of the resultant films, for example the tear resistance and the dart drop impact strength.

WO 2023/012254 A1, WO 2012/012256 A1, and WO 2021/191019 A1 all describe polyethylenes produced in a 3-reactor sequence and films produced therefrom. None of these applications seeks to address high melt pressure issues.

As such, there remains a desire in the field of polyethylenes for film applications to access polyethylene grades that combine good processability properties (i.e. low melt pressure) with excellent mechanical properties (of the resultant film), in particular impact properties. This is especially important for very thin films, which are more economical and environmentally friendly than thicker films.

### Summary

The present invention is based on the finding that a multimodal polyethylene defined by the shape of the molecular weight distribution, achieves particularly impressive mechanical properties, when compared to other polyethylenes not having this particularly beneficial polymer structure.

Therefore, in a first aspect, the present invention is directed to a multimodal polyethylene (PE) comprising ethylene and one or more monomers selected from the group consisting of $C_3$ to $C_{10}$ alpha olefins, wherein the polyethylene (PE) has the following properties:

a) a melt flow rate ($MFR_2$), determined according to ISO 1133 at a load of 2.16 kg and at a temperature of 190 °C, in the range from 1.0 to 20.0 g/10 min;
b) a density, determined according to ISO 1183, in the range from 900 to 935 kg/m$^3$;
c) a molecular weight distribution (Mw/Mn), determined according to the method given in the measurement methods, in the range from 5.0 to 11.0; and
d) a number average molecular weight (Mn), determined according to the method given in the measurement methods, of at most 16.0 kg/mol.

In a second aspect, the present invention is directed to a multimodal polyethylene (PE) comprising ethylene and one or more monomers selected from the group consisting of $C_3$ to $C_{10}$ alpha olefins, wherein the polyethylene (PE) has the following properties:

a) a melt flow rate ($MFR_2$), determined according to ISO 1133 at a load of 2.16 kg and at a temperature of 190 °C, in the range from 1.0 to 20.0 g/10 min;
b) a density, determined according to ISO 1183, in the range from 900 to 935 kg/m$^3$;
c) FW25M/FW75M, determined according to the method given in the determination methods, is in the range from 2.40 to 4.00.

In a third aspect, the present invention is directed to a multimodal polyethylene (PE) comprising:

a) a first polyethylene fraction (PE1) comprising ethylene and a comonomer selected from the group consisting of $C_3$ to $C_{10}$ alpha olefins and having a melt flow rate ($MFR_2$), determined according to ISO 1133 at a load of 2.16 kg and at a temperature of 190 °C, in the range from 0.01 to 2.00 g/10 min, more preferably in the range from 0.05 to 1.00 g/10 min, most preferably in the range from 0.10 to 0.50 g/10 min;
b) a second polyethylene fraction (PE2) comprising ethylene and a comonomer selected from the group consisting of

$C_3$ to $C_{10}$ alpha olefins and having a melt flow rate ($MFR_2$), determined according to ISO 1133 at a load of 2.16 kg and at a temperature of 190 °C, in the range from 20 to 300 g/10 min, more preferably in the range from 40 to 200 g/10 min, most preferably in the range from 60 to 150 g/10 min; and

c) a third polyethylene fraction (PE3) comprising ethylene and a comonomer selected from the group consisting of $C_3$ to $C_{10}$ alpha olefins and having a melt flow rate ($MFR_2$), determined according to ISO 1133 at a load of 2.16 kg and at a temperature of 190 °C, in the range from 0.10 to 10.0 g/10 min, more preferably in the range from 0.30 to 5.0 g/10 min, most preferably in the range from 0.50 to 2.0 g/10 min,

wherein the ratio between the melt flow rates ($MFR_2$) of the second polyethylene fraction and the first polyethylene fraction [$MFR_2$(PE2)/$MFR_2$(PE1)] is in the range from 70 to 2000.

In a fourth aspect, the present invention is directed to a process for producing the multimodal polyethylene (PE) of the first, second, or third aspects, comprising the following steps in the given order:

a) providing a single site catalyst (SSC);

b) optionally prepolymerizing the single site catalyst (SSC) in the presence of ethylene and optionally one or more comonomers selected from the group consisting of $C_3$-$C_{10}$ alpha olefins in a prepolymerization reactor (R0), thereby producing a prepolymerized single site catalyst (SSC);

c) in the presence of the optionally prepolymerized single site catalyst (SSC), polymerizing ethylene and one or more comonomers selected from the group consisting of $C_3$-$C_{10}$ alpha olefins in a first polymerization reactor (R1), thereby producing the first polyethylene fraction (PE1);

d) in the presence of the single site catalyst (SSC) and the first polyethylene fraction (PE1), polymerizing ethylene and one or more comonomers selected from the group consisting of $C_3$-$C_{10}$ alpha olefins in a second polymerization reactor (R2), thereby producing the second polyethylene fraction (PE2);

e) in the presence of the single site catalyst (SSC), the first polyethylene fraction (PE1), and the second polyethylene fraction (PE2), polymerizing ethylene and one or more comonomers selected from the group consisting of $C_3$-$C_{10}$ alpha olefins in a third polymerization reactor (R3), thereby producing the third polyethylene fraction (PE3); and

f) compounding the resultant mixture of the single site catalyst (SSC), the first polyethylene fraction (PE1), the second polyethylene fraction (PE2) and the third polyethylene fraction (PE3), optionally with one or more additives (Ad), thereby obtaining the multimodal polyethylene (PE),

wherein the first polymerization reactor (R1) and the second polymerization reactor (R2) are preferably slurry reactors, more preferably loop reactors, and the third polymerization reactor (R3) is preferably a gas phase reactor.

In a final aspect, the present invention is directed to a film (F), more preferably a blown film (BF), comprising at least 75 wt.-% of the multimodal polyethylene (PE) according to the first, second, or third aspects.

## Definitions

Unless defined otherwise, all technical and scientific terms used herein have the same meaning as commonly understood by one of ordinary skill in the art to which the invention pertains. Although, any methods and materials similar or equivalent to those described herein can be used in practice for testing of the present invention, the preferred materials and methods are described herein. In describing and claiming the present invention, the following terminology will be used in accordance with the definitions set out below.

Unless clearly indicated otherwise, use of the terms "a", "an", and the like refers to one or more.

In the following, amounts are given in % by weight (wt.-%) unless it is stated otherwise.

An ethylene homopolymer is a polymer that essentially consists of ethylene monomer units. Due to impurities especially during commercial polymerization processes, an ethylene homopolymer can comprise up to 0.1 mol-% comonomer units, preferably up to 0.05 mol-% comonomer units and most preferably up to 0.01 mol-% comonomer units.

An ethylene copolymer is a copolymer of ethylene monomer units and comonomer units, preferably selected from $C_3$-$C_{10}$ alpha-olefins. Ethylene copolymers can comprise comonomer units from one or more comonomers different in their amounts of carbon atoms. In the context of the present invention, the term "copolymer of A and B" means that only units derived from A and B may be present, excluding, for example, terpolymers containing units derived from A, B and C.

An ethylene terpolymer is an ethylene copolymer, as described above, which consists of ethylene and two different comonomer units, typically selected from $C_3$-$C_{10}$ alpha-olefins.

In the context of the present invention, the term "polymer of ethylene" may refer to ethylene homopolymers, ethylene copolymer, ethylene terpolymers and any other polymer that is at least 50 wt.-% ethylene.

Multimodal polymers are polymers having a multimodal distribution of one or more properties. Multimodal ethylene polymers may typically be multimodal with respect to comonomer content or multimodal with respect to molecular weight (as seen through the melt flow rates of the respective fractions and the final composition).

Bimodal polymers are polymers having a bimodal distribution of one or more properties. Bimodal random ethylene polymers may typically be bimodal with respect to comonomer content or bimodal with respect to molecular weight (as seen through the melt flow rates of the first fraction and the final composition).

The present invention will now be described in more detail.

## Detailed Description

### Multimodal polyethylene (PE) of the first aspect

In a first aspect, the present invention is directed to a multimodal polyethylene (PE) comprising ethylene and one or more monomers selected from the group consisting of $C_3$ to $C_{10}$ alpha olefins.

It is preferred that the multimodal polyethylene (PE) of the first aspect comprises ethylene and one or more monomers selected from the group consisting of $C_4$ to $C_8$ alpha olefins. Further preferably, the multimodal polyethylene (PE) of the first aspect comprises ethylene and two monomers selected from the group consisting of $C_4$ to $C_8$ alpha olefins. Most preferably, the multimodal polyethylene (PE) of the first aspect comprises ethylene, 1-butene, and 1-hexene.

The multimodal polyethylene (PE) of the first aspect has a melt flow rate ($MFR_2$), determined according to ISO 1133 at a load of 2.16 kg and at a temperature of 190 °C, in the range from 1.0 to 20.0 g/10 min, more preferably in the range from 1.2 to 10.0 g/10 min, yet more preferably in the range from 1.5 to 5.0 g/10 min, most preferably in the range from 1.6 to 3.0 g/10 min.

The multimodal polyethylene (PE) of the first aspect has a density, determined according to ISO 1183, in the range from 900 to 935 kg/$m^3$, more preferably in the range from 907 to 929 kg/$m^3$, most preferably in the range from 913 to 923 kg/$m^3$.

The multimodal polyethylene (PE) of the first aspect has a molecular weight distribution (Mw/Mn), determined according to the method given in the measurement methods, in the range from 5.0 to 11.0, more preferably in the range from 6.0 to 10.5, most preferably in the range from 7.0 to 10.0.

The multimodal polyethylene (PE) of the first aspect has a number average molecular weight (Mn), determined according to the method given in the measurement methods, of at most 16.0 kg/mol, more preferably at most 14.5 kg/mol, most preferably at most 13.0 kg/mol.

The multimodal polyethylene (PE) of the first aspect preferably has a number average molecular weight (Mn), determined according to the method given in the measurement methods, of at least 6.0 kg/mol. As such, it is preferred that the multimodal polyethylene (PE) of the first aspect has a number average molecular weight (Mn), determined according to the method given in the measurement methods, in the range from 6.0 to 16.0 kg/mol, more preferably in the range from 6.0 to 14.5 kg/mol, most preferably in the range from 6.0 to 13.0 kg/mol.

The multimodal polyethylene (PE) of the first aspect preferably has a FW25M/FW75M, determined according to the method given in the determination methods, in the range from 2.40 to 4.00, more preferably in the range from 2.60 to 3.70, most preferably in the range from 2.80 to 3.40.

The FW25M/FW75M feature is determined from the molecular weight distribution curve, as laid out in the determination methods. By comparing the FW25M (a height at which side peaks/shoulders will contribute to the peak width) with the FW75M (a height at which side peaks/shoulders will generally not contribute to the peak width), the presence of side peaks/shoulders is indicated by higher FW25M/FW75M values.

Multimodal polyethylenes may also be described by the properties of the individual polyethylene fractions.

As such, it is preferred that the multimodal polyethylene (PE) of the first aspect comprises:

a) a first polyethylene fraction (PE1) comprising ethylene and a comonomer selected from the group consisting of $C_3$ to $C_{10}$ alpha olefins and having a melt flow rate ($MFR_2$), determined according to ISO 1133 at a load of 2.16 kg and at a temperature of 190 °C, in the range from 0.01 to 2.00 g/10 min, more preferably in the range from 0.05 to 1.00 g/10 min, most preferably in the range from 0.10 to 0.50 g/10 min;

b) a second polyethylene fraction (PE2) comprising ethylene and a comonomer selected from the group consisting of $C_3$ to $C_{10}$ alpha olefins and having a melt flow rate ($MFR_2$), determined according to ISO 1133 at a load of 2.16 kg and at a temperature of 190 °C, in the range from 20 to 300 g/10 min, more preferably in the range from 40 to 200 g/10 min, most preferably in the range from 60 to 150 g/10 min; and

c) a third polyethylene fraction (PE3) comprising ethylene and a comonomer selected from the group consisting of $C_3$ to $C_{10}$ alpha olefins and having a melt flow rate ($MFR_2$), determined according to ISO 1133 at a load of 2.16 kg and at a temperature of 190 °C, in the range from 0.10 to 10.0 g/10 min, more preferably in the range from 0.30 to 5.0 g/10 min, most preferably in the range from 0.50 to 2.0 g/10 min,

wherein the ratio between the melt flow rates ($MFR_2$) of the second polyethylene fraction and the first polyethylene fraction [$MFR_2$(PE2)/$MFR_2$(PE1)] is in the range from 70 to 2000, more preferably in the range from 100 to 1000, most preferably in

the range from 200 to 800.

In one embodiment, the multimodal polyethylene (PE) of the first aspect comprises:

a) the first polyethylene fraction (PE1) in an amount in the range from 10.0 to 30.0 wt.-%, relative to the total weight of the multimodal polyethylene (PE);
b) the second polyethylene fraction (PE2) in an amount in the range from 10.0 to 30.0 wt.-%, relative to the total weight of the multimodal polyethylene (PE); and
c) the third polyethylene fraction (PE3) in an amount in the range from 40.0 to 80.0 wt.-%, relative to the total weight of the multimodal polyethylene (PE).

In a further embodiment, the multimodal polyethylene (PE) of the first aspect comprises:

a) the first polyethylene fraction (PE1) in an amount in the range from 14.0 to 26.0 wt.-%, relative to the total weight of the multimodal polyethylene (PE);
b) the second polyethylene fraction (PE2) in an amount in the range from 15.0 to 27.0 wt.-%, relative to the total weight of the multimodal polyethylene (PE); and
c) the third polyethylene fraction (PE3) in an amount in the range from 47.0 to 71.0 wt.-%, relative to the total weight of the multimodal polyethylene (PE).

In yet a further embodiment, the multimodal polyethylene (PE) of the first aspect comprises:

a) the first polyethylene fraction (PE1) in an amount in the range from 17.0 to 22.0 wt.-%, relative to the total weight of the multimodal polyethylene (PE);
b) the second polyethylene fraction (PE2) in an amount in the range 19.0 to 24.0 wt.-%, relative to the total weight of the multimodal polyethylene (PE); and
c) the third polyethylene fraction (PE3) in an amount in the range from 54.0 to 64.0 wt.-%, relative to the total weight of the multimodal polyethylene (PE).

**Multimodal polyethylene (PE) of the second aspect**

In a second aspect, the present invention is directed to a multimodal polyethylene (PE) comprising ethylene and one or more monomers selected from the group consisting of $C_3$ to $C_{10}$ alpha olefins.

It is preferred that the multimodal polyethylene (PE) of the second aspect comprises ethylene and one or more monomers selected from the group consisting of $C_4$ to $C_8$ alpha olefins. Further preferably, the multimodal polyethylene (PE) of the second aspect comprises ethylene and two monomers selected from the group consisting of $C_4$ to $C_8$ alpha olefins. Most preferably, the multimodal polyethylene (PE) of the second aspect comprises ethylene, 1-butene, and 1-hexene.

The multimodal polyethylene (PE) of the second aspect has a melt flow rate ($MFR_2$), determined according to ISO 1133 at a load of 2.16 kg and at a temperature of 190 °C, in the range from 1.0 to 20.0 g/10 min, more preferably in the range from 1.2 to 10.0 g/10 min, yet more preferably in the range from 1.5 to 5.0 g/10 min, most preferably in the range from 1.6 to 3.0 g/10 min.

The multimodal polyethylene (PE) of the second aspect has a density, determined according to ISO 1183, in the range from 900 to 935 kg/m$^3$, more preferably in the range from 907 to 929 kg/m$^3$, most preferably in the range from 913 to 923 kg/m$^3$.

The multimodal polyethylene (PE) of the second aspect has a FW25M/FW75M, determined according to the method given in the determination methods, in the range from 2.40 to 4.00, more preferably in the range from 2.60 to 3.70, most preferably in the range from 2.80 to 3.40.

The multimodal polyethylene (PE) of the second aspect preferably has a molecular weight distribution (Mw/Mn), determined according to the method given in the measurement methods, in the range from 5.0 to 11.0, more preferably in the range from 6.0 to 10.5, most preferably in the range from 7.0 to 10.0.

The multimodal polyethylene (PE) of the second aspect preferably has a number average molecular weight (Mn), determined according to the method given in the measurement methods, of at most 16.0 kg/mol, more preferably at most 14.5 kg/mol, most preferably at most 13.0 kg/mol.

The multimodal polyethylene (PE) of the second aspect preferably has a number average molecular weight (Mn), determined according to the method given in the measurement methods, of at least 6.0 kg/mol. As such, it is preferred that the multimodal polyethylene (PE) of the first aspect has a number average molecular weight (Mn), determined according to the method given in the measurement methods, in the range from 6.0 to 16.0 kg/mol, more preferably in the range from 6.0 to 14.5 kg/mol, most preferably in the range from 6.0 to 13.0 kg/mol.

As such, it is preferred that the multimodal polyethylene (PE) of the second aspect comprises:

a) a first polyethylene fraction (PE1) comprising ethylene and a comonomer selected from the group consisting of $C_3$ to $C_{10}$ alpha olefins and having a melt flow rate ($MFR_2$), determined according to ISO 1133 at a load of 2.16 kg and at a temperature of 190 °C, in the range from 0.01 to 2.00 g/10 min, more preferably in the range from 0.05 to 1.00 g/10 min, most preferably in the range from 0.10 to 0.50 g/10 min;
b) a second polyethylene fraction (PE2) comprising ethylene and a comonomer selected from the group consisting of $C_3$ to $C_{10}$ alpha olefins and having a melt flow rate ($MFR_2$), determined according to ISO 1133 at a load of 2.16 kg and at a temperature of 190 °C, in the range from 20 to 300 g/10 min, more preferably in the range from 40 to 200 g/10 min, most preferably in the range from 60 to 150 g/10 min; and
c) a third polyethylene fraction (PE3) comprising ethylene and a comonomer selected from the group consisting of $C_3$ to $C_{10}$ alpha olefins and having a melt flow rate ($MFR_2$), determined according to ISO 1133 at a load of 2.16 kg and at a temperature of 190 °C, in the range from 0.10 to 10.0 g/10 min, more preferably in the range from 0.30 to 5.0 g/10 min, most preferably in the range from 0.50 to 2.0 g/10 min,

wherein the ratio between the melt flow rates ($MFR_2$) of the second polyethylene fraction and the first polyethylene fraction [$MFR_2$(PE2)/$MFR_2$(PE1)] is in the range from 70 to 2000, more preferably in the range from 100 to 1000, most preferably in the range from 200 to 800.

In one embodiment, the multimodal polyethylene (PE) of the second aspect comprises:

a) the first polyethylene fraction (PE1) in an amount in the range from 10.0 to 30.0 wt.-%, relative to the total weight of the multimodal polyethylene (PE);
b) the second polyethylene fraction (PE2) in an amount in the range from 10.0 to 30.0 wt.-%, relative to the total weight of the multimodal polyethylene (PE); and
c) the third polyethylene fraction (PE3) in an amount in the range from 40.0 to 80.0 wt.-%, relative to the total weight of the multimodal polyethylene (PE).

In a further embodiment, the multimodal polyethylene (PE) of the second aspect comprises:

a) the first polyethylene fraction (PE1) in an amount in the range from 14.0 to 26.0 wt.-%, relative to the total weight of the multimodal polyethylene (PE);
b) the second polyethylene fraction (PE2) in an amount in the range from 15.0 to 27.0 wt.-%, relative to the total weight of the multimodal polyethylene (PE); and
c) the third polyethylene fraction (PE3) in an amount in the range from 47.0 to 71.0 wt.-%, relative to the total weight of the multimodal polyethylene (PE).

In yet a further embodiment, the multimodal polyethylene (PE) of the second aspect comprises:

a) the first polyethylene fraction (PE1) in an amount in the range from 17.0 to 22.0 wt.-%, relative to the total weight of the multimodal polyethylene (PE);
b) the second polyethylene fraction (PE2) in an amount in the range 19.0 to 24.0 wt.-%, relative to the total weight of the multimodal polyethylene (PE); and
c) the third polyethylene fraction (PE3) in an amount in the range from 54.0 to 64.0 wt.-%, relative to the total weight of the multimodal polyethylene (PE).

**Multimodal polyethylene (PE) of the third aspect**

In a third aspect, the present invention is directed to a multimodal polyethylene (PE) comprising:

a) a first polyethylene fraction (PE1) comprising ethylene and a comonomer selected from the group consisting of $C_3$ to $C_{10}$ alpha olefins and having a melt flow rate ($MFR_2$), determined according to ISO 1133 at a load of 2.16 kg and at a temperature of 190 °C, in the range from 0.01 to 2.00 g/10 min, more preferably in the range from 0.05 to 1.00 g/10 min, most preferably in the range from 0.10 to 0.50 g/10 min;
b) a second polyethylene fraction (PE2) comprising ethylene and a comonomer selected from the group consisting of $C_3$ to $C_{10}$ alpha olefins and having a melt flow rate ($MFR_2$), determined according to ISO 1133 at a load of 2.16 kg and at a temperature of 190 °C, in the range from 20 to 300 g/10 min, more preferably in the range from 40 to 200 g/10 min, most preferably in the range from 60 to 150 g/10 min; and
c) a third polyethylene fraction (PE3) comprising ethylene and a comonomer selected from the group consisting of $C_3$

to $C_{10}$ alpha olefins and having a melt flow rate ($MFR_2$), determined according to ISO 1133 at a load of 2.16 kg and at a temperature of 190 °C, in the range from 0.10 to 10.0 g/10 min, more preferably in the range from 0.30 to 5.0 g/10 min, most preferably in the range from 0.50 to 2.0 g/10 min,

wherein the ratio between the melt flow rates ($MFR_2$) of the second polyethylene fraction and the first polyethylene fraction [$MFR_2$(PE2)/$MFR_2$(PE1)] is in the range from 70 to 2000, more preferably more preferably in the range from 100 to 1000, most preferably in the range from 200 to 800.

In one embodiment, the multimodal polyethylene (PE) of the third aspect comprises:

a) the first polyethylene fraction (PE1) in an amount in the range from 10.0 to 30.0 wt.-%, relative to the total weight of the multimodal polyethylene (PE);
b) the second polyethylene fraction (PE2) in an amount in the range from 10.0 to 30.0 wt.-%, relative to the total weight of the multimodal polyethylene (PE); and
c) the third polyethylene fraction (PE3) in an amount in the range from 40.0 to 80.0 wt.-%, relative to the total weight of the multimodal polyethylene (PE).

In a further embodiment, the multimodal polyethylene (PE) of the third aspect comprises:

a) the first polyethylene fraction (PE1) in an amount in the range from 14.0 to 26.0 wt.-%, relative to the total weight of the multimodal polyethylene (PE);
b) the second polyethylene fraction (PE2) in an amount in the range from 15.0 to 27.0 wt.-%, relative to the total weight of the multimodal polyethylene (PE); and
c) the third polyethylene fraction (PE3) in an amount in the range from 47.0 to 71.0 wt.-%, relative to the total weight of the multimodal polyethylene (PE).

In yet a further embodiment, the multimodal polyethylene (PE) of the third aspect comprises:

a) the first polyethylene fraction (PE1) in an amount in the range from 17.0 to 22.0 wt.-%, relative to the total weight of the multimodal polyethylene (PE);
b) the second polyethylene fraction (PE2) in an amount in the range 19.0 to 24.0 wt.-%, relative to the total weight of the multimodal polyethylene (PE); and
c) the third polyethylene fraction (PE3) in an amount in the range from 54.0 to 64.0 wt.-%, relative to the total weight of the multimodal polyethylene (PE).

The multimodal polyethylene (PE) of the third aspect preferably has a melt flow rate ($MFR_2$), determined according to ISO 1133 at a load of 2.16 kg and at a temperature of 190 °C, in the range from 1.0 to 20.0 g/10 min, more preferably in the range from 1.2 to 10.0 g/10 min, yet more preferably in the range from 1.5 to 5.0 g/10 min, most preferably in the range from 1.6 to 3.0 g/10 min.

The multimodal polyethylene (PE) of the third aspect preferably has a density, determined according to ISO 1183, in the range from 900 to 935 kg/$m^3$, more preferably in the range from 907 to 929 kg/$m^3$, most preferably in the range from 913 to 923 kg/$m^3$.

The multimodal polyethylene (PE) of the third aspect preferably has a FW25M/FW75M, determined according to the method given in the determination methods, in the range from 2.40 to 4.00, more preferably in the range from 2.60 to 3.70, most preferably in the range from 2.80 to 3.40.

The multimodal polyethylene (PE) of the third aspect preferably has a molecular weight distribution (Mw/Mn), determined according to the method given in the measurement methods, in the range from 5.0 to 11.0, more preferably in the range from 6.0 to 10.5, most preferably in the range from 7.0 to 10.0.

The multimodal polyethylene (PE) of the third aspect preferably has a number average molecular weight (Mn), determined according to the method given in the measurement methods, of at most 16.0 kg/mol, more preferably at most 14.5 kg/mol, most preferably at most 13.0 kg/mol.

The multimodal polyethylene (PE) of the third aspect preferably has a number average molecular weight (Mn), determined according to the method given in the measurement methods, of at least 6.0 kg/mol. As such, it is preferred that the multimodal polyethylene (PE) of the first aspect has a number average molecular weight (Mn), determined according to the method given in the measurement methods, in the range from 6.0 to 16.0 kg/mol, more preferably in the range from 6.0 to 14.5 kg/mol, most preferably in the range from 6.0 to 13.0 kg/mol.

Multimodal polyethylene (PE) of the first, second, and third aspects

The following features (expressed as "the multimodal polyethylene has" or the "multimodal polyethylene is") apply equally to the first, second and third aspects.
The multimodal polyethylene (PE) preferably has a weight average molecular weight (Mw), determined according to the method given in the measurement methods, in the range from 50.0 to 120.0 kg/mol, more preferably in the range from 60.0 to 110.0 kg/mol, most preferably in the range from 70.0 to 100.0 kg/mol.
The multimodal polyethylene (PE) preferably has a z-average molecular weight (Mz), determined according to the method given in the measurement methods, in the range from 175 to 400 kg/mol, more preferably in the range from 185 to 300 kg/mol, most preferably in the range from 195 to 230 kg/mol
The multimodal polyethylene (PE) preferably has a molecular weight distribution (Mz/Mn), determined according to the method given in the measurement methods, in the range from 14.0 to 30.0, more preferably in the range from 16.0 to 26.0, most preferably in the range from 18.0 to 23.5.
The multimodal polyethylene (PE) preferably has a molecular weight distribution (Mz/Mw), determined according to the method given in the measurement methods, in the range from 2.00 to 3.00, more preferably in the range from 2.20 to 2.90, most preferably in the range from 2.40 to 2.80.
The multimodal polyethylene (PE) preferably has a melt flow rate ($MFR_5$), determined according to ISO 1133 at a load of 5.0 kg and at a temperature of 190 °C, in the range from 3.0 to 30.0 g/10 min, more preferably in the range from 3.5 to 15.0 g/10 min, most preferably in the range from 4.0 to 8.0 g/10 min.
The multimodal polyethylene (PE) preferably has a melt flow rate ($MFR_{21}$), determined according to ISO 1133 at a load of 21.6 kg and at a temperature of 190 °C, in the range from 30.0 to 300.0 g/10 min, more preferably in the range from 40.0 to 150.0 g/10 min, most preferably in the range from 50.0 to 80.0 g/10 min.
The multimodal polyethylene (PE) preferably has a total comonomer content, determined by quantitative $^{13}C$-NMR spectroscopic analysis, in the range from 2.30 to 5.00 mol-%, more preferably in the range from 3.00 to 4.00 mol-%, most preferably in the range from 3.30 to 3.70 mol-%.
The multimodal polyethylene (PE) preferably has a dart drop impact strength (DDI), determined according to ISO 7765-1 on a 20 μm blown film specimen, in the range from 300 to 1000 g, more preferably in the range from 400 to 900 g, most preferably in the range from 450 to 800 g.
The multimodal polyethylene (PE) preferably has a dart drop impact strength (DDI), determined according to ISO 7765-1 on a 20 μm blown film specimen, in the range from 15 to 50 g/μm, more preferably in the range from 20 to 45 g/μm, most preferably in the range from 23 to 40 g/μm.
The multimodal polyethylene (PE) preferably has a tensile modulus in the machine direction (TM-MD), determined according to ISO 527-3 on a 20 μm blown film specimen, in the range from 100 to 300 MPa, more preferably in the range from 140 to 260 MPa, most preferably in the range from 180 to 220 MPa.
The multimodal polyethylene (PE) preferably has a tensile modulus in the transverse direction (TM-TD), determined according to ISO 527-3 on a 20 μm blown film specimen, in the range from 100 to 300 MPa, more preferably in the range from 140 to 260 MPa, most preferably in the range from 195 to 235 MPa.
The multimodal polyethylene (PE) preferably has a haze value, determined according to ASTM D1003 on a 20 μm blown film specimen, in the range from 0.0 to 20.0%, more preferably in the range from 0.0 to 17.0%, most preferably in the range from 0.0 to 14.0%.
The multimodal polyethylene (PE) preferably has a relative tear resistance in the machine direction (Tear-MD), determined according to ISO 6383-2 on a 20 μm blown film specimen, in the range from 90 to 200 N/mm, more preferably in the range from 95 to 150 N/mm, most preferably in the range from 100 to 120 N/mm.
The multimodal polyethylene (PE) preferably has a relative tear resistance in the transverse direction (Tear-TD), determined according to ISO 6383-2 on a 20 μm blown film specimen, in the range from 150 to 300 N/mm, more preferably in the range from 180 to 270 N/mm, most preferably in the range from 200 to 250 N/mm.

**First polyethylene fraction (PE1)**

The following features (expressed as "the first polyethylene fraction has" or the "first polyethylene fraction is") apply equally to the first polyethylene fraction (PE1) of the first, second and third aspects.
The first polyethylene fraction (PE1) comprises ethylene and a comonomer selected from the group consisting of $C_3$ to $C_{10}$ alpha olefins, more preferably from the group consisting of $C_4$ to $C_8$ alpha olefins, yet more preferably from the group consisting of $C_4$ to $C_6$ alpha olefins. Most preferably, the first polyethylene fraction (PE1) is a copolymer of ethylene and 1-butene.
The first polyethylene fraction (PE1) has a melt flow rate ($MFR_2$), determined according to ISO 1133 at a load of 2.16 kg and at a temperature of 190 °C, in the range from 0.01 to 2.00 g/10 min, more preferably in the range from 0.05 to 1.00 g/10 min, most preferably in the range from 0.10 to 0.50 g/10 min.

The first polyethylene fraction (PE1) preferably has a density, determined according to ISO 1183, in the range from 910 to 945 kg/$m^3$, more preferably in the range from 917 to 939 kg/$m^3$, most preferably in the range from 923 to 933 kg/$m^3$.

The first polyethylene fraction (PE1) preferably has a 1-butene content, determined by quantitative $^{13}$C-NMR spectroscopic analysis, in the range from 0.30 to 2.00 mol-%, more preferably in the range from 0.50 to 1.50 mol-%, most preferably in the range from 0.70 to 1.30 mol-%.

The first polyethylene fraction (PE1) is preferably present in an amount in the range from 10.0 to 30.0 wt.-%, more preferably in the range from 14.0 to 26.0 wt.-%, most preferably in the range from 17.0 to 22.0 wt.-%, relative to the total weight of the multimodal polyethylene (PE).

Second polyethylene fraction (PE2)

The following features (expressed as "the second polyethylene fraction has" or the "second polyethylene fraction is") apply equally to the second polyethylene fraction (PE2) of the first, second and third aspects.

The second polyethylene fraction (PE2) comprises ethylene and a comonomer selected from the group consisting of $C_3$ to $C_{10}$ alpha olefins, more preferably from the group consisting of $C_4$ to $C_8$ alpha olefins, yet more preferably from the group consisting of $C_4$ to $C_6$ alpha olefins. Most preferably, the second polyethylene fraction (PE2) is a copolymer of ethylene and 1-butene.

The second polyethylene fraction (PE2) has a melt flow rate ($MFR_2$), determined according to ISO 1133 at a load of 2.16 kg and at a temperature of 190 °C, in the range from 20 to 300 g/10 min, more preferably in the range from 40 to 200 g/10 min, most preferably in the range from 60 to 150 g/10 min.

The second polyethylene fraction (PE2) preferably has a density, determined according to ISO 1183, in the range from 930 to 965 kg/$m^3$, more preferably in the range from 940 to 960 kg/$m^3$, most preferably in the range from 945 to 955 kg/$m^3$.

The second polyethylene fraction (PE2) preferably has a 1-butene content, determined by quantitative $^{13}$C-NMR spectroscopic analysis, in the range from 1.00 to 4.00 mol-%, more preferably in the range from 1.50 to 3.00 mol-%, most preferably in the range from 1.90 to 2.40 mol-%.

The second polyethylene fraction (PE2) is preferably present in an amount in the range from 10.0 to 30.0 wt.-%, more preferably in the range from 15.0 to 27.0 wt.-%, most preferably in the range from 19.0 to 24.0 wt.-%, relative to the total weight of the multimodal polyethylene (PE).

The ratio between the melt flow rates ($MFR_2$) of the second polyethylene fraction and the first polyethylene fraction [$MFR_2$(PE2)/$MFR_2$(PE1)] is in the range from 70 to 2000, more preferably in the range from 100 to 1000, most preferably in the range from 200 to 800.

The combination of the first polyethylene fraction (PE1) and the second polyethylene fraction (PE2) preferably has a number average molecular weight (Mn), determined according to the method given in the measurement methods, of at most 12.0 kg/mol, more preferably at most 10.0 kg/mol, most preferably at most 8.0 kg/mol.

The combination of the first polyethylene fraction (PE1) and the second polyethylene fraction (PE2) preferably has a number average molecular weight (Mn), determined according to the method given in the measurement methods, of at least 3.0 kg/mol. As such, it is preferred that the combination of the first polyethylene fraction (PE1) and the second polyethylene fraction (PE2) has a number average molecular weight (Mn), determined according to the method given in the measurement methods, in the range from 3.0 to 12.0 kg/mol, more preferably in the range from 3.0 to 10.0 kg/mol, most preferably in the range from 3.0 to 8.0 kg/mol.

The combination of the first polyethylene fraction (PE1) and the second polyethylene fraction (PE2) preferably has a weight average molecular weight (Mw), determined according to the method given in the measurement methods, in the range from 40.0 to 110.0 kg/mol, more preferably in the range from 50.0 to 90.0 kg/mol, most preferably in the range from 60.0 to 75.0 kg/mol.

The combination of the first polyethylene fraction (PE1) and the second polyethylene fraction (PE2) preferably has a molecular weight distribution (Mw/Mn), determined according to the method given in the measurement methods, in the range from 6.0 to 20.0, more preferably in the range from 8.0 to 17.0, most preferably in the range from 10.0 to 15.0.

**Third polyethylene fraction (PE3)**

The following features (expressed as "the third polyethylene fraction has" or the "third polyethylene fraction is") apply equally to the third polyethylene fraction (PE3) of the first, second and third aspects.

The third polyethylene fraction (PE3) comprises ethylene and a comonomer selected from the group consisting of $C_3$ to $C_{10}$ alpha olefins, more preferably from the group consisting of $C_4$ to $C_8$ alpha olefins, yet more preferably from the group consisting of $C_4$ to $C_6$ alpha olefins. Most preferably, the third polyethylene fraction (PE3) is a copolymer of ethylene and 1-hexene.

The third polyethylene fraction (PE3) has a melt flow rate ($MFR_2$), determined according to ISO 1133 at a load of 2.16 kg and at a temperature of 190 °C, in the range from 0.10 to 10.0 g/10 min, more preferably in the range from 0.30 to 5.0 g/10 min, most preferably in the range from 0.50 to 2.0 g/10 min.

The third polyethylene fraction (PE3) preferably has a density, determined according to ISO 1183, in the range from 890 to 920 kg/$m^3$, more preferably in the range from 894 to 914 kg/$m^3$, most preferably in the range from 898 to 908 kg/$m^3$.

The third polyethylene fraction (PE3) preferably has a 1-hexene content, determined by quantitative $^{13}$C-NMR spectroscopic analysis, in the range from 3.00 to 7.00 mol-%, more preferably in the range from 4.00 to 6.00 mol-%, most preferably in the range from 4.50 to 5.50 mol-%.

The third polyethylene fraction (PE3) is preferably present in an amount in the range from 40.0 to 80.0 wt.-%, more preferably in the range from 47.0 to 71.0 wt.-%, most preferably in the range from 54.0 to 64.0 wt.-%, relative to the total weight of the multimodal polyethylene (PE).

**Other fractions**

In addition to the first polyethylene fraction (PE1), the second polyethylene fraction (PE2), and the third polyethylene fraction (PE3), the multimodal polyethylene (PE) may comprise further polyethylene fractions.

If the multimodal polyethylene (PE) is produced in a multistage polymerization process, a prepolymerization step may be optionally employed. If a prepolymerization reaction occurs, then the prepolymer is assigned to the first polyethylene fraction (PE1), that is the properties of the combination of the prepolymer and the polymer produced in the first polymerization reactor proper are determined. Generally speaking, the amount of prepolymer formed in such processes is less than 5 wt.-% of the total weight of the multimodal polyethylene (PE).

Further polymerization steps can be carried out after the production of the first polyethylene fraction (PE1), the second polyethylene fraction (PE2), and the third polyethylene fraction (PE3), producing one or more further polyethylene fractions, for example an optional fourth polyethylene fraction (PE4), an optional fifth polyethylene fraction (PE5), and so on.

It is preferred that the total weight of the first polyethylene fraction (PE1), the second polyethylene fraction (PE2), and the third polyethylene fraction (PE3) (including the optional prepolymer) is at least 80 wt.-%, more preferably at least 90 wt.-%, yet more preferably at least 95 wt.-%, even more preferably at least 98 wt.-%, of the total weight of the multimodal polyethylene (PE). Most preferably, the polyethylene (PE) consists of the first polyethylene fraction (PE1), the second polyethylene fraction (PE2), and the third polyethylene fraction (PE3) (including the optional prepolymer).

**Process**

In a fourth aspect, the present invention is directed to a process for producing the multimodal polyethylene (PE) of the first, second, or third aspects, comprising the following steps in the given order:

a) providing a single site catalyst (SSC);
b) optionally prepolymerizing the single site catalyst (SSC) in the presence of ethylene and optionally one or more comonomers selected from the group consisting of $C_3$-$C_{10}$ alpha olefins in a prepolymerization reactor (R0), thereby producing a prepolymerized single site catalyst (SSC);
c) in the presence of the optionally prepolymerized single site catalyst (SSC), polymerizing ethylene and one or more comonomers selected from the group consisting of $C_3$-$C_{10}$ alpha olefins in a first polymerization reactor (R1), thereby producing the first polyethylene fraction (PE1);
d) in the presence of the single site catalyst (SSC) and the first polyethylene fraction (PE1), polymerizing ethylene and one or more comonomers selected from the group consisting of $C_3$-$C_{10}$ alpha olefins in a second polymerization reactor (R2), thereby producing the second polyethylene fraction (PE2);
e) in the presence of the single site catalyst (SSC), the first polyethylene fraction (PE1), and the second polyethylene fraction (PE2), polymerizing ethylene and one or more comonomers selected from the group consisting of $C_3$-$C_{10}$ alpha olefins in a third polymerization reactor (R3), thereby producing the third polyethylene fraction (PE3); and
f) compounding the resultant mixture of the single site catalyst (SSC), the first polyethylene fraction (PE1), the second polyethylene fraction (PE2) and the third polyethylene fraction (PE3), optionally with one or more additives (Ad), thereby obtaining the multimodal polyethylene (PE),

wherein the first polymerization reactor (R1) and the second polymerization reactor (R2) are preferably slurry reactors, more preferably loop reactors, and the third polymerization reactor (R3) is preferably a gas phase reactor.

It is preferred that step c) involves polymerizing ethylene and a comonomer selected from the group consisting of $C_3$ to $C_8$ alpha olefins, more preferably from the group consisting of $C_4$ to $C_8$ alpha olefins, yet more preferably from the

group consisting of $C_4$ to $C_6$ alpha olefins. Most preferably, step c) involves polymerizing ethylene and 1-butene. It is particularly preferred that the first polyethylene fraction (PE1) produced in step c) is the first polyethylene fraction (PE1) of the first, second, or third aspect.

It is preferred that step d) involves polymerizing ethylene and a comonomer selected from the group consisting of $C_3$ to $C_8$ alpha olefins, more preferably from the group consisting of $C_4$ to $C_8$ alpha olefins, yet more preferably from the group consisting of $C_4$ to $C_6$ alpha olefins. Most preferably, step c) involves polymerizing ethylene and 1-butene. It is particularly preferred that the second polyethylene fraction (PE2) produced in step c) is the second polyethylene fraction (PE2) of the first, second, or third aspect.

It is preferred that step c) involves polymerizing ethylene and a comonomer selected from the group consisting of $C_3$ to $C_8$ alpha olefins, more preferably from the group consisting of $C_4$ to $C_8$ alpha olefins, yet more preferably from the group consisting of $C_4$ to $C_6$ alpha olefins. Most preferably, step c) involves polymerizing ethylene and 1-hexene. It is particularly preferred that the third polyethylene fraction (PE3) produced in step c) is the third polyethylene fraction (PE1) of the first, second, or third aspect.

If the multimodal polyethylene produced according to the fourth aspect is the multimodal polyethylene of the third aspect, then step c) involves polymerizing ethylene and optionally 1-butene, step d) involves polymerizing ethylene and 1-butene, and step e) involves polymerizing ethylene and 1-hexene.

For all aspects, it is preferred that step b) involves polymerizing the same monomers/comonomers as in step c).

It is preferred that the single-site catalyst (SSC) is a metallocene catalyst, more preferably a metallocene catalyst comprising organometallic compound (C).

A metallocene catalyst comprises a metallocene complex and a cocatalyst. The metallocene compound or complex is referred herein also as organometallic compound (C).

The organometallic compound (C) comprises a transition metal (M) of Group 3 to 10 of the Periodic Table (IUPAC 2007) or of an actinide or lanthanide.

The term "an organometallic compound (C)" in accordance with the present invention includes any metallocene or non-metallocene compound of a transition metal, which bears at least one organic (coordination) ligand and exhibits the catalytic activity alone or together with a cocatalyst. The transition metal compounds are well known in the art and the present invention covers compounds of metals from Group 3 to 10, e.g. Group 3 to 7, or 3 to 6, such as Group 4 to 6 of the Periodic Table, (IUPAC 2007), as well as lanthanides or actinides.

In an embodiment, the organometallic compound (C) has the following formula (I):

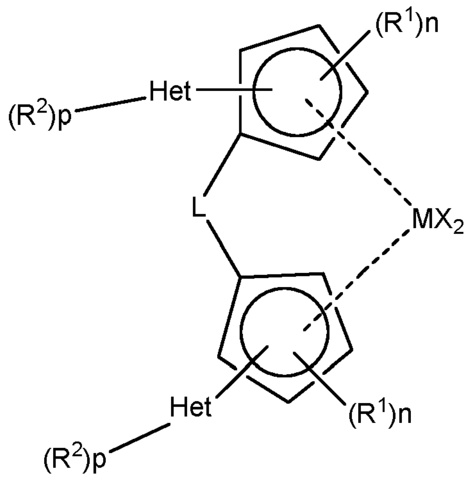

(I)

wherein each X is independently a halogen atom, a $C_{1-6}$-alkyl group, $C_{1-6}$-alkoxy group, phenyl or benzyl group;
each Het is independently a monocyclic heteroaromatic group containing at least one heteroatom selected from O or S;
L is -R'$_2$Si-, wherein each R' is independently $C_{1-20}$-hydrocarbyl or $C_{1-10}$-alkyl substituted with alkoxy having 1 to 10 carbon atoms;
M is Ti, Zr or Hf;
each $R^1$ is the same or different and is a $C_{1-6}$-alkyl group or $C_{1-6}$-alkoxy group;
each n is 1 to 2;
each $R^2$ is the same or different and is a $C_{1-6}$-alkyl group, $C_{1-6}$-alkoxy group or -Si(R)$_3$ group;
each R is $C_{1-10}$-alkyl or phenyl group optionally substituted by 1 to 3 $C_{1-6}$-alkyl groups; and
each p is 0 to 1.

Preferably, the compound of formula (I) has the structure

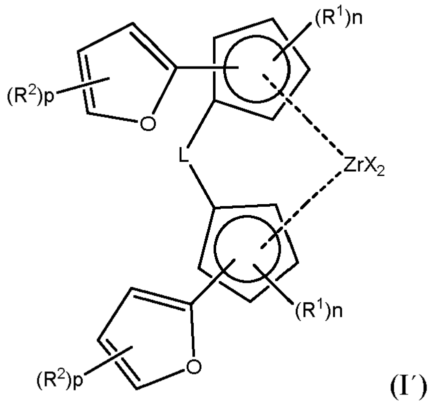

(I′)

wherein each X is independently a halogen atom, a $C_{1-6}$-alkyl group, $C_{1-6}$-alkoxy group, phenyl or benzyl group;
L is a $Me_2Si$-;
each $R^1$ is the same or different and is a $C_{1-6}$-alkyl group, e.g. methyl or t-Bu;
each n is 1 to 2;
$R^2$ is a -$Si(R)_3$ alkyl group; each p is 1;
each R is $C_{1-6}$-alkyl or phenyl group.

Highly preferred complexes of formula (I) are

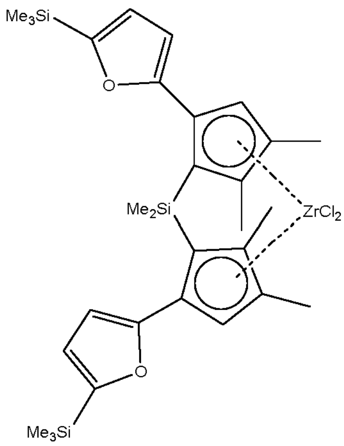

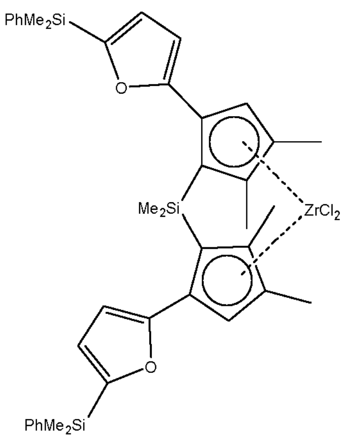

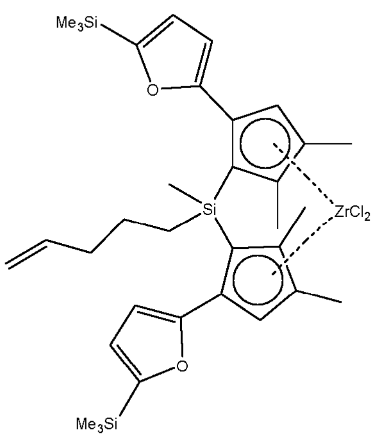

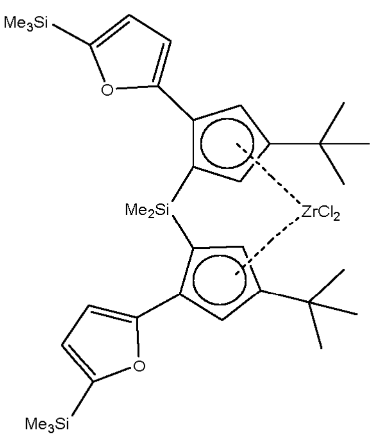

Most preferably the complex dimethylsilanediylbis[2-(5-trimethylsilylfuran-2-yl)-4,5-dimethylcyclopentadien-1-yl] zirconium dichloride is used.

More preferably the first ethylene polymer fraction (A1) and the second ethylene polymer fraction (A2) of the first polymer of ethylene (A) are produced using, i.e. in the presence of, the same metallocene catalyst.
To form a catalyst, a cocatalyst, also known as an activator, is used, as is well known in the art. Cocatalysts comprising Al or B are well known and can be used here. The use of aluminoxanes (e.g. MAO) or boron based cocatalysts (such as borates) is preferred.
It is particularly preferred that the multimodal polyethylene (PE) of the first, second and third aspects is produced in the presence of a single site catalyst (SSC), more preferably wherein the single site catalyst (SSC) comprises a metallocene complex (C) and a cocatalyst, wherein the metallocene complex (C) has a structure as described above.
It is particularly preferred that the multimodal polyethylene (PE) of the first, second, and third aspects, is obtainable, more preferably obtained, according to the process of the fourth aspect.

**Films (F)**

In a final aspect, the present invention is directed to a film (F), more preferably a blown film (BF), comprising at least 75 wt.-% of the multimodal polyethylene (PE) according to the first, second, or third aspects.
It is preferred that the film (F) comprises at least 80 wt.-%, more preferably at least 90 wt.-%, yet more preferably at least 95 wt.-%, even more preferably, at least 98 wt.-%, of the multimodal polyethylene (PE) according to the first, second, or third aspects. In some embodiments, the film (F) consists of the multimodal polyethylene (PE) according to the first, second, or third aspects.
In some embodiments, the film (F) contains no further polymeric components other than the multimodal polyethylene (PE).
Other components of the film (F) may include, but are not limited to, further polyethylenes, polypropylenes, other polyolefins, inorganic fillers, and additive(s) (Ad).
The additive(s) (Ad) are preferably selected from antioxidants, process stabilizers, UV-stabilizers, pigments other than carbon black, fillers, antistatic additives, antiblock agents, nucleating agents, acid scavengers, slip agent, polymer processing agent (PPA) and mixtures thereof.
It is understood that the content of additives (Ad), given with respect to the total weight of the film (F), includes any carrier polymers used to introduce the additives to said film (F), i.e. masterbatch carrier polymers. An example of such a carrier polymer would be a polyethylene, such as HDPE, LDPE, or LLDPE, in the form of powder.
If present, the content of the further additive(s) is in the range from 0.0 to 10.0 wt.-%, more preferably in the range from 0.0 to 5.0 wt.-%, most preferably in the range from 0.0 to 2.0 wt.-%, relative to the total weight of the film (F).
In some embodiments, the content of the further additive(s) is in the range from 0.1 to 10.0 wt.-%, more preferably in the range from 0.1 to 5.0 wt.-%, most preferably in the range from 0.1 to 2.0 wt.-%, relative to the total weight of the film (F).
In one preferred embodiment, the film (F) consists of the multimodal polyethylene (PE) according to the first, second, or third aspects and the additive(s) (Ad).
It is preferred that the film (F) is a cast film (CF) or a blown film (BF), most preferably a blown film (BF).
The film (F) preferably has a thickness in the range from 5 to 150 μm, more preferably in the range from 10 to 100 μm, most preferably in the range from 15 to 50 μm.
The film (F), more preferably the blown film (BF), preferably has dart drop impact strength (DDI), determined according to ISO 7765-1, in the range from 300 to 1000 g, more preferably in the range from 400 to 900 g, most preferably in the range from 450 to 800 g.
The film (F), more preferably the blown film (BF), preferably has dart drop impact strength (DDI), determined according to ISO 7765-1, in the range from 15 to 50 g/μm, more preferably in the range from 20 to 45 g/μm, most preferably in the range from 23 to 40 g/μm.
The film (F), more preferably the blown film (BF), preferably has tensile modulus in the machine direction (TM-MD), determined according to ISO 527-3, in the range from 100 to 300 MPa, more preferably in the range from 140 to 260 MPa, most preferably in the range from 180 to 220 MPa.
The film (F), more preferably the blown film (BF), preferably has tensile modulus in the transverse direction (TM-TD), determined according to ISO 527-3, in the range from 100 to 300 MPa, more preferably in the range from 140 to 260 MPa, most preferably in the range from 195 to 235 MPa.
The film (F), more preferably the blown film (BF), preferably has haze value, determined according to ASTM D 1003, in the range from 0.0 to 20.0%, more preferably in the range from 0.0 to 17.0%, most preferably in the range from 0.0 to 14.0%.
The film (F), more preferably the blown film (BF), preferably has relative tear resistance in the machine direction (Tear-MD), determined according to ISO 6383-2, in the range from 90 to 200 N/mm, more preferably in the range from 95 to 150 N/mm, most preferably in the range from 100 to 120 N/mm.
The film (F), more preferably the blown film (BF), preferably has relative tear resistance in the transverse direction

(Tear-TD), determined according to ISO 6383-2, in the range from 150 to 300 N/mm, more preferably in the range from 180 to 270 N/mm, most preferably in the range from 200 to 250 N/mm.

## EXAMPLES

### 1. Measurement methods

The following definitions of terms and determination methods apply for the above general description of the invention including the claims as well as to the below examples unless otherwise defined.

### Melt Flow Rate

The melt flow rate (MFR) was determined according to ISO 1133 and is indicated in g/10 min. The MFR is an indication of the flowability, and hence the processability, of the polymer. The MFR is determined at 190 °C for polyethylene. MFR may be determined at different loadings such as 2.16 kg ($MFR_2$), 5 kg ($MFR_5$) or 21.6 kg ($MFR_{21}$).

Calculation of $MFR_2$ of Fractions PE2 and PE3

$$\log A = x \cdot \log B + (1 - x) \cdot \log C$$

$$C = 10^{\wedge}\frac{(\log A - x.\log B)}{(1-x)}$$

For third polyethylene PE3:

B = $MFR_2$ of combined first and second fractions (PE1+PE2)
C = $MFR_2$ of third polyethylene fraction (PE3)
A = final $MFR_2$ (mixture) of combined polyethylene fractions (PE1+PE2+PE3)
x = weight fraction of fraction (PE1+PE2), relative to total amount of PE1+PE2+PE3.

For second polyethylene fraction (PE2):

B = $MFR_2$ of first polyethylene (PE1)
C = $MFR_2$ of second polyethylene (PE2)
A = final $MFR_2$ (mixture) of loop polymer (PE1+PE2)
x = weight fraction of the first polyethylene fraction (PE1), relative to total amount of PE1+PE2.

**Density**

Density of the polymer was measured according to ISO 1183 and ISO 17855-2 for sample preparation and is given in $kg/m^3$.

Calculation of density of Fractions PE2 and PE3

$$A = xB + (1 - x)C$$

For third polyethylene PE3:

B = density of combined first and second fractions (PE1+PE2)
C = density of third polyethylene fraction (PE3)
A = final density (mixture) of combined polyethylene fractions (PE1+PE2+PE3)
x = weight fraction of fraction (PE1+PE2), relative to total amount of PE1+PE2+PE3.

For second polyethylene fraction (PE2):

B = density of first polyethylene (PE1)
C = density of second polyethylene (PE2)
A = final density (mixture) of loop polymer (PE1+PE2)
x = weight fraction of the first polyethylene fraction (PE1), relative to total amount of PE1+PE2.

**Molecular weight averages, molecular weight distribution (Mn, Mw, Mz, MWD)**

Molecular weight averages (Mz, Mw and Mn), Molecular weight distribution (MWD) and its broadness, described by polydispersity index, PDI= Mw/Mn (wherein Mn is the number average molecular weight and Mw is the weight average molecular weight) were determined by Gel Permeation Chromatography (GPC) according to ASTM D 6474-12 using the following formulas:

$$M_n = \frac{\sum_{i=1}^{N} A_i}{\sum_{i=1}^{N} (A_i/M_i)} \quad (1)$$

$$M_w = \frac{\sum_{i=1}^{N} (A_i x\, M_i)}{\sum_{i=1}^{N} A_i} \quad (2)$$

$$M_z = \frac{\sum_{i=1}^{N} (A_i\, x\, M_i^2)}{\sum_{i=1}^{N} (A_i x M_i)} \quad (3)$$

For a constant elution volume interval $\Delta V_i$, where $A_i$, and $M_i$ are the chromatographic peak slice area and polyolefin molecular weight (MW), respectively associated with the elution volume, $V_i$, where N is equal to the number of data points obtained from the chromatogram between the integration limits.

A high temperature GPC instrument, equipped with an IR5 from PolymerChar (Valencia, Spain) and with 3 x Agilent-PLgel Olexis and 1× Agilent-PLgel Olexis Guard columns was used. As solvent and mobile phase 1,2,4-trichlorobenzene (TCB) stabilized with 250 mg/L 2,6-Di tert butyl-4-methyl-phenol) was used. The chromatographic system was operated at 160 °C and at a constant flow rate of 1 mL/min. 200 μL of sample solution was injected per analysis. Data collection was performed using PolymerChar GPC-IR control software.

The column set was calibrated using universal calibration with 19 narrow MWD polystyrene (PS) standards in the range of 0.5 kg/mol to 11 500 kg/mol. The PS standards were dissolved at 160°C for 30 min. The conversion of the polystyrene peak molecular weight to polyolefin molecular weights is accomplished by using the Mark Houwink equation and the following Mark Houwink constants:

$$K_{PS} = 19 \text{ x } 10^{-3} \text{ mL/g}, \quad \alpha_{PS} = 0.655$$

$$K_{PE} = 39 \text{ x } 10^{-3} \text{ mL/g}, \quad \alpha_{PE} = 0.725$$

$$K_{PP} = 19 \text{ x } 10^{-3} \text{ mL/g}, \quad \alpha_{PP} = 0.725$$

A third order polynomial fit was used to fit the calibration data. The processing and integration of the peaks was done according to ISO 16014-1, meaning that in the low molecular weight region the elution of the last volume of the PS standard of 500 g/mol was chosen, when the polymer peak does not return to the baseline before the corresponded elution volume.

All samples were prepared in the concentration range of 0.5-1 mg/ml and dissolved at 160 °C for 2.5 hours for PP or 3 hours for PE under continuous gentle shaking.

The FW25M parameter has been calculated as the absolute value of the GPC' peak width (with logM on the x axis) at 25% of the peak's height. Correspondingly, the FW75M parameter has been calculated as the peak's width (with logM on the x axis) at 75% of the peak's height. This is illustrated in Figures 2 and 3 for CE1 and IE1, respectively.

Comonomer contents:

Quantification of microstructure by NMR spectroscopy

Quantitative nuclear-magnetic resonance (NMR) spectroscopy was used to quantify the comonomer content of the polymers.

Quantitative $^{13}C\{^1H\}$ NMR spectra recorded in the molten-state using a Bruker Avance III 500 NMR spectrometer operating at 500.13 and 125.76 MHz for $^1H$ and $^{13}C$ respectively. All spectra were recorded using a $^{13}C$ optimized 7 mm magic-angle spinning (MAS) probehead at 150°C using nitrogen gas for all pneumatics. Approximately 200 mg of material was packed into a 7 mm outer diameter zirconia MAS rotor and spun at 4 kHz. This setup was chosen primarily for the high sensitivity needed for rapid identification and accurate quantification {klimke06, parkinson07, castignolles09}. Standard single-pulse excitation was employed utilizing the NOE at short recycle delays of 3 s {pollard04, klimke06} and the RS-HEPT decoupling scheme{fillip05,griffin07}. A total of 1024 (1k) transients were acquired per spectra.

Quantitative $^{13}C\{^1H\}$ NMR spectra were processed, integrated and relevant quantitative properties determined from the integrals. All chemical shifts are internally referenced to the bulk methylene signal (δ+) at 30.00 ppm.

The amount of ethylene was quantified using the integral of the methylene (δ+) sites at 30.00 ppm accounting for the number of reporting sites per monomer:

$$E = I_{\delta+} / 2$$

the presence of isolated comonomer units is corrected for based on the number of isolated comonomer units present:

$$Etotal = E + (3*B + 2*H) / 2$$

where B and H are defined for their respective comonomers. Correction for consecutive and non-consecutive commoner incorporation, when present, is undertaken in a similar way.

Characteristic signals corresponding to the incorporation of 1-butene were observed and the comonomer fraction calculated as the fraction of 1-butene in the polymer with respect to all monomer in the polymer:

$$fBtotal = Btotal / (Etotal + Btotal + Htotal)$$

The amount isolated 1-butene incorporated in EEBEE sequences was quantified using the integral of the $_*$B2 sites at 39.8 ppm accounting for the number of reporting sites per comonomer:

$$B = I_{*B2}$$

If present the amount consecutively incorporated 1-butene in EEBBEE sequences was quantified using the integral of the ααB2B2 site at 39.4 ppm accounting for the number of reporting sites per comonomer:

$$BB = 2 * I\alpha\alpha B2B2$$

If present the amount non consecutively incorporated 1-butene in EEBEBEE sequences was quantified using the integral of the ββB2B2 site at 24.6 ppm accounting for the number of reporting sites per comonomer:

$$BEB = 2 * I\beta\beta B2B2$$

Due to the overlap of the *B2 and *βB2B2 sites of isolated (EEBEE) and non-consecutively incorporated (EEBEBEE) 1-butene respectively the total amount of isolated 1-butene incorporation is corrected based on the amount of non-consecutive 1-butene present:

$$B = I_{*B2} - 2 * I_{\beta\beta B2B2}$$

Sequences of BBB were not observed. The total 1-butene content was calculated based on the sum of isolated, consecutive and non consecutively incorporated 1-butene:

$$Btotal = B + BB + BEB$$

The total mole fraction of 1-butene in the polymer was then calculated as:

$$fB = Btotal / ( Etotal + Btotal + Htotal)$$

Characteristic signals corresponding to the incorporation of 1-hexene were observed and the comonomer fraction calculated as the fraction of 1-hexene in the polymer with respect to all monomer in the polymer:

$$fHtotal = Htotal / (Etotal + Btotal + Htotal)$$

The amount isolated 1-hexene incorporated in EEHEE sequences was quantified using the integral of the *B4 sites at 38.3 ppm accounting for the number of reporting sites per comonomer:

$$H = I_{*B4}$$

If present the amount consecutively incorporated 1-hexene in EEHHEE sequences was quantified using the integral of the ααB4B4 site at 40.5 ppm accounting for the number of reporting sites per comonomer:

$$HH = 2 * I\alpha\alpha B4B4$$

If present the amount non consecutively incorporated 1-hexene in EEHEHEE sequences was quantified using the integral of the ββB4B4 site at 24.7 ppm accounting for the number of reporting sites per comonomer:

$$HEH = 2 * I\beta\beta B4B4$$

Sequences of HHH were not observed. The total 1-hexene content was calculated based on the sum of isolated, consecutive and non consecutively incorporated 1-hexene:

$$Htotal = H + HH + HEH$$

The total mole fraction of 1-hexene in the polymer was then calculated as:

$$fH = Htotal / ( Etotal + Btotal + Htotal)$$

The mole percent comonomer incorporation is calculated from the mole fraction:

$$B [mol\text{-}\%] = 100 * fB$$

$$H [mol\text{-}\%] = 100 * fH$$

The weight percent comonomer incorporation is calculated from the mole fraction:

$$B [wt.\text{-}\%] = 100 * ( fB * 56.11) / ( (fB * 56.11) + (fH * 84.16) + ((1-(fB + fH)) * 28.05) )$$

$$H [wt.\text{-}\%] = 100 * ( fH * 84.16 ) / ( (fB * 56.11) + (fH * 84.16) + ((1-(fB + fH)) * 28.05) )$$

References:

Klimke, K., Parkinson, M., Piel, C., Kaminsky, W., Spiess, H.W., Wilhelm, M., Macromol. Chem. Phys. 2006;207:382.
Parkinson, M., Klimke, K., Spiess, H.W., Wilhelm, M., Macromol. Chem. Phys. 2007;208:2128.
Pollard, M., Klimke, K., Graf, R., Spiess, H.W., Wilhelm, M., Sperber, O., Piel, C., Kaminsky, W., Macromolecules 2004;37:813.
Filip, X., Tripon, C., Filip, C., J. Mag. Resn. 2005, 176, 239.
Griffin, J.M., Tripon, C., Samoson, A., Filip, C., and Brown, S.P., Mag. Res. in Chem. 2007 45, S1, S198.
Castignolles, P., Graf, R., Parkinson, M., Wilhelm, M., Gaborieau, M., Polymer 50 (2009) 2373
Busico, V., Cipullo, R., Prog. Polym. Sci. 26 (2001) 443.

Busico, V., Cipullo, R., Monaco, G., Vacatello, M., Segre, A.L., Macromoleucles 30 (1997) 6251.
Zhou, Z., Kuemmerle, R., Qiu, X., Redwine, D., Cong, R., Taha, A., Baugh, D. Winniford, B., J. Mag. Reson. 187 (2007) 225.
Busico, V., Carbonniere, P., Cipullo, R., Pellecchia, R., Severn, J., Talarico, G., Macromol. Rapid Commun. 2007, 28, 1128.
Resconi, L., Cavallo, L., Fait, A., Piemontesi, F., Chem. Rev. 2000, 100, 1253.

Calculation of $C_4$ content of fraction PE2

$$A = xB + (1 - x)C$$

B = C4 content (wt.-%) of first polyethylene (PE1)
C = C4 content (wt.-%) of second polyethylene (PE2)
A = final C4 content (mixture) of loop polymer (PE1+PE2)
x = weight fraction of the first polyethylene fraction (PE1), relative to total amount of PE1+PE2.

Conversion between mol-% and wt.-% is within the common general knowledge of the person skilled in the art.

Tensile modulus

The tensile test was conducted according to ISO 527-3, moreover the modulus of elasticity (secant modulus between 0.05 % and 0.25 % elongation) is also determined. Type 2 (parallel-sided specimens) specimens were used.
During testing a specimen is extended along its major axis for determination of tensile properties at constant testspeed (speed of crosshead) until the specimen fracture. During this procedure the load sustained by the specimen and the elongation, which is measured by the crosshead, are measured.

Standard conditions:

Conditioning time: > 96 h at 23 ±2°C and 50 ±10 %rh
Test temperature: 23°C
Gripping distance: 100 mm
Gauge length: 100 mm
Secant modulus: 0.05 % - 0.25 %
Testspeed modulus: 1 mm/min
Testspeed: 200 mm/min

**Haze**

The haze was determined according to ASTM D1003-00 directly on the film produced in the experimental section (i.e. with a thickness of 20 μm)

**Tear resistance (Elmendorf)**

Elmendorf tear strength in machine direction (MD) and in transverse direction (TD) were measured on the film according to ISO 6383-2 and reported in Newton (N). Relative tear resistance is given in Newton per mm (N/mm), wherein the tear resistance is divided by the thickness of the film.

**Dart drop strength (DDI): Impact resistance by free-falling dart method**

The DDI was measured according to ISO 7765-1: 1988 / Method A from the films as produced indicated below. This test method covers the determination of the energy that causes films to fail under specified conditions of impact of a free-falling dart from a specified height that would result in failure of 50 % of the specimens tested (Staircase method A). A uniform missile mass increment is employed during the test and the missile weight is decreased or increased by the

uniform increment after test of each specimen, depending upon the result (failure or no failure) observed for the specimen.

Standard conditions:

Conditioning time: > 96 h ±2°C at 50±10 %rh
Test temperature: 23°C
Dart head material: phenolic
Dart diameter: 38 mm
Drop height: 660 mm

Results:

Impact failure weight - 50% [g]

## 2. Examples

### 2.1 Catalyst preparation for CAT1

*Loading of $SiO_2$:*

10 kg of silica (PQ Corporation ES757, calcined 600°C) was added from a feeding drum and inertized in the reactor until $O_2$ level below 2 ppm was reached.

*Preparation of MAO/tol/MC:*

30 wt.-% MAO in toluene (14.1 kg) was added into another reactor from a balance followed by toluene (4.0 kg) at 25°C (oil circulation temp) and stirring with 95 rpm. Stirring speed was increased from 95 rpm -> 200 rpm after toluene addition, stirring time was 30 min. Metallocene Rac-dimethylsilanediylbis {2-(5-(trimethylsilyl)furan-2-yl)-4,5-dimethylcyclopentadien-1-yl} zirconium dichloride 477 g was added from a metal cylinder followed by flushing with 4 kg toluene (total toluene amount 8.0 kg). Reactor stirring speed was changed to 95 rpm for MC feeding and returned back to 200 rpm for 3 h reaction time. After reaction time MAO/tol/MC solution was transferred into a feeding vessel.

*Preparation of catalyst:*

Reactor temperature was set to 10°C (oil circulation temp) and stirring was turned to 40 rpm during MAO/tol/MC addition. MAO/tol/MC solution (22.2 kg) was added within 205 min followed by 60 min stirring time (oil circulation temp was set to 25°C). After stirring "dry mixture" was stabilised for 12 h at 25°C (oil circulation temp), stirring 0 rpm. Reactor was turned 20° (back and forth) and stirring was turned on 5 rpm for few rounds once an hour. After stabilisation the catalyst was dried at 60°C (oil circulation temp) for 2 h under nitrogen flow 2 kg/h, followed by 13 h under vacuum (same nitrogen flow with stirring 5 rpm). Dried catalyst was sampled and HC content was measured in the glove box with Sartorius Moisture Analyser, (Model MA45) using thermogravimetric method. Target HC level was < 2% (actual 1.3 %).

### 2.2 Polymerization:

Borstar pilot plant with a 3-reactor set-up (loop1 - loop2 - GPR 1) and a prepolymerization loop reactor.

**Table 1:** Polymerization conditions for polyethylene A

| | IE1 | IE2 | CE1 |
|---|---|---|---|
| <u>**Catalyst**</u> | CAT1 | CAT1 | CAT1 |
| <u>**Prepoly reactor**</u> | | | |
| Temp. (°C) | 60 | 60 | 60 |
| Press. (kPa) | 5770 | 5770 | 5770 |
| C2 (kg/h) | 2.0 | 2.0 | 2.0 |
| H2(g/h) | 0.05 | 0.05 | 0.05 |
| C4 (g/h) | 80.0 | 79.9 | 152.1 |
| Split (wt.-%) | 2.1 | 1.6 | 1.6 |
| <u>**loop 1 fraction (PE1)**</u> | | | |
| Temp. (°C) | 85 | 85 | 85 |
| Press. (kPa) | 5600 | 5600 | 5590 |
| C2 conc. (mol-%) | 3.4 | 3.5 | 5.1 |
| H2/C2 ratio (mol/kmol) | 0.25 | 0.23 | 0.42 |
| C4/C2 ratio (mol/kmol) | 62.3 | 50.7 | 35.4 |
| Split (including prepolymer) (wt.-%) | 20.7 | 19.6 | 19.1 |
| Density (kg/$m^3$) after loop 1 (fraction (PE1)) | 928.3 | 930.5 | 938.2 |
| $MFR_2$ (g/10 min) after loop 1 (fraction (PE1)) | 0.30 | 0.20 | 10.2 |
| C4 content (mol-%) after loop 1 (fraction (PE1)) | 1.06 | 0.99 | 1.05 |
| <u>**loop 2 fraction (PE2)**</u> | | | |
| Temp. (°C) | 85 | 85 | 85 |
| Press. (kPa) | 5400 | 5390 | 5380 |
| C2 conc. (mol-%) | 4.3 | 3.7 | 4.1 |
| H2/C2 ratio (mol/kmol) | 3.87 | 2.71 | 0.37 |
| C4/C2 ratio (mol/kmol) | 154 | 170 | 40.5 |
| Split (wt.-%) | 21.4 | 21.6 | 22.5 |
| Density (kg/$m^3$) after loop 2 (fractions (PE1+PE2)) | 939.8 | 939.9 | 939.6 |
| $MFR_2$ (g/10 min) after loop 2 (fractions (PE1+PE2)) | 5.0 | 5.4 | 9.6 |
| C4 content (mol-%) after loop 2 (fraction (PE1+PE2)) | 1.6 | 1.62 | 0.89 |

| | | | |
|---|---|---|---|
| $MFR_2$ (g/10 min) of loop 2 material (fraction (PE2)) | 76.0 | 107.5 | 9.12 |
| Density (kg/m$^3$) of loop 2 material (fraction (PE2)) | 950.9 | 948.4 | 940.8 |
| C4 content (mol-%) of loop 2 material (fraction (PE2)) | 2.1 | 2.2 | 0.8 |
| $MFR_2$(PE2)/$MFR_2$(PE1) | 253 | 537 | 0.89 |
| Mn (g/mol) of combined fractions (PE1+PE2) | 4990 | 5570 | 14600 |
| Mw (g/mol) of combined fractions (PE1+PE2) | 69200 | 67250 | 57450 |
| Mw/Mn of combined fractions (PE1+PE2) | 13.9 | 12.1 | 3.9 |
| **GPR Fraction (PE3)** | | | |
| Temp. (°C) | 75 | 75 | 75 |
| Press. (kPa) | 2000 | 2000 | 2000 |
| H2/C2 ratio (mol/kmol) | 1.36 | 1.36 | 0.95 |
| C6/C2 ratio (mol/kmol) | 8.0 | 8.0 | 9.0 |
| Split (wt.-%) | 57.9 | 58.8 | 58.4 |
| $MFR_2$ (g/10 min) of GPR material (Component (PE3)) | 0.79 | 1.01 | 0.39 |
| Density (kg/m$^3$) of GPR material (Component (PE3)) | 902.3 | 903.8 | 905.0 |
| C6 content (mol-%) of GPR material (fraction (PE3)) | 5.1 | 4.8 | 4.6 |

The polymer powder of polyethylenes IE1, IE2, and CE1 were each mixed with 300 ppm of Irganox 1010 (BASF) and 1200 ppm of Irgafos 168 (BASF), compounded and extruded under nitrogen atmosphere to pellets by using a JSW CIMP90 twin screw extruder melt temperature 192°C.

CE2 is XP8358ML, a commercial ethylene-1-hexene copolymer commercially available from Exxon Chemicals (US)

**Table 2**: Polymer properties of inventive and comparative examples

| | | IE1 | IE2 | CE1 | CE2 |
|---|---|---|---|---|---|
| $MFR_2$ (final pellets) | [g/10 min] | 1.72 | 2.02 | 1.47 | 0.50 |
| $MFR_5$ | [g/10 min] | 5.23 | 6.13 | 4.29 | n.m. |
| $MFR_{21}$ | [g/10 min] | 59.3 | 64.8 | 41.6 | n.m. |
| Density | [kg/m$^3$] | 918.1 | 918.7 | 919.4 | 918.0 |
| Mz | [g/mol] | 218000 | 207000 | 187500 | 286500 |
| Mw | [g/mol] | 85050 | 81500 | 89400 | 122000 |
| Mn | [g/mol] | 9440 | 10100 | 20700 | 28500 |
| Mz/Mw | [-] | 2.6 | 2.5 | 2.1 | 2.4 |
| Mw/Mn | [-] | 9.0 | 8.1 | 4.3 | 4.3 |
| Mz/Mn | [-] | 23.1 | 20.5 | 9.1 | 10.1 |
| FW25M/FW75M | [-] | 2.90 | 3.06 | 2.16 | n.m. |
| C4 | [mol-%] | 0.67 | 0.66 | 0.38 | 0.0 |
| C6 | [mol-%] | 2.93 | 2.81 | 2.69 | 2.65 |
| C4+C6 | [mol-%] | 3.60 | 3.47 | 3.07 | 2.65 |

### 2.3 Films

Films samples were produced from IE1, IE2, CE1, and CE2 on a small-scale laboratory blown film line from company COLLIN Lab & Pilot Solutions GmbH.

The line consists of an extruder with a Ø 25 mm screw with an LID ratio of 25. The extruder temperature has been set at 180°C, the melt temperature was -182-184°C and has been recorded after 45 min of process stabilization. The extruder is followed by a blow head which is equipped with a Ø 50 mm annular die with a die gap of 1.5 mm. The line has been run at a speed of 7,6 m/min. The blow up ratio (BUR) of the film bubble was 2.5. The film was produced with a thickness of 20 μm.

The films produced were used for the following mechanical testing. The processing conditions for the film extrusion are also given in Table 3

**Table 3:** Film properties of inventive and comparative examples

| | | IE1 | IE2 | CE1 | CE2 |
|---|---|---|---|---|---|
| **Extruder** | | | | | |
| Melt temperature | [°C] | 183 | 184 | 182 | 203 |
| Melt pressure | [bar] | 223 | 233 | 253 | 336 |
| Take off speed | [m/min] | 7.6 | 7.6 | 7.5 | 5.5 |
| **Film** | | | | | |
| Tens Mod (MD) | [MPa] | 205 | 199 | 197 | 204 |
| Tens Mod (TD) | [MPa] | 222 | 208 | 216 | 234 |
| DDI | [g] | 767 | 490 | 958 | 615 |
| DDI | [g/μm] | 38.4 | 24.5 | 47.9 | 30.8 |
| Haze | [%] | 12.7 | 12.5 | 25.8 | 23.5 |
| Relative tear resistance (MD) | [N/mm] | 105.3 | 102.7 | 91.0 | 86.4 |
| Relative tear resistance (TD) | [N/mm] | 211.6 | 228.3 | 170.4 | 144.1 |

As can be seen from Table 3, the inventive examples have superior haze and tear resistance properties. Furthermore, the inventive examples also have considerably better processibility, with lower melt temp (relative to CE2), lower melt pressure (relative to both CE1 and CE2), and higher take off speed (relative to CE2).

## Claims

1. A multimodal polyethylene (PE) comprising ethylene and one or more comonomers selected from the group consisting of $C_3$ to $C_{10}$ alpha olefins, wherein the polyethylene (PE) has the following properties:

   a) a melt flow rate ($MFR_2$), determined according to ISO 1133 at a load of 2.16 kg and at a temperature of 190 °C, in the range from 1.0 to 20.0 g/10 min;
   b) a density, determined according to ISO 1183, in the range from 900 to 935 kg/$m^3$;
   c) a molecular weight distribution (Mw/Mn), determined according to the method given in the measurement methods, in the range from 5.0 to 11.0; and
   d) a number average molecular weight (Mn), determined according to the method given in the measurement methods, of at most 16.0 kg/mol.

2. The multimodal polyethylene (PE) according to claim 1, wherein the FW25M/FW75M, determined according to the method given in the determination methods, is in the range from 2.40 to 4.00, more preferably in the range from 2.60 to 3.70, most preferably in the range from 2.80 to 3.40.

3. The multimodal polyethylene (PE) according to claim 1 or claim 2, having one or more, preferably all, of the following properties:

a) a number average molecular weight (Mn), determined according to the method given in the measurement methods, of at most 14.5 kg/mol, most preferably at most 13.0 kg/mol;
b) a weight average molecular weight (Mw), determined according to the method given in the measurement methods, in the range from 50.0 to 120.0 kg/mol, more preferably in the range from 60.0 to 110.0 kg/mol, most preferably in the range from 70.0 to 100.0 kg/mol;
c) a z-average molecular weight (Mz), determined according to the method given in the measurement methods, in the range from 175 to 400 kg/mol, more preferably in the range from 185 to 300 kg/mol, most preferably in the range from 195 to 230 kg/mol;
d) a molecular weight distribution (Mw/Mn), determined according to the method given in the measurement methods, in the range from 6.0 to 10.5, most preferably in the range from 7.0 to 10.0;
e) a molecular weight distribution (Mz/Mn), determined according to the method given in the measurement methods, in the range from 14.0 to 30.0, more preferably in the range from 16.0 to 26.0, most preferably in the range from 18.0 to 23.5; and
f) a molecular weight distribution (Mz/Mw), determined according to the method given in the measurement methods, in the range from 2.00 to 3.00, more preferably in the range from 220 to 2.90, most preferably in the range from 2.40 to 2.80.

**4.** The multimodal polyethylene (PE) according to any one of the preceding claims, having one or more, preferably all, of the following properties:

a) a melt flow rate ($MFR_2$), determined according to ISO 1133 at a load of 2.16 kg and at a temperature of 190 °C, in the range from 1.2 to 10.0 g/10 min, yet more preferably in the range from 1.5 to 5.0 g/10 min, most preferably in the range from 1.6 to 3.0 g/10 min;
b) a melt flow rate ($MFR_5$), determined according to ISO 1133 at a load of 5.0 kg and at a temperature of 190 °C, in the range from 3.0 to 30.0 g/10 min, more preferably in the range from 3.5 to 15.0 g/10 min, most preferably in the range from 4.0 to 8.0 g/10 min;
c) a melt flow rate ($MFR_{21}$), determined according to ISO 1133 at a load of 21.6 kg and at a temperature of 190 °C, in the range from 30.0 to 300.0 g/10 min, more preferably in the range from 40.0 to 150.0 g/10 min, most preferably in the range from 50.0 to 80.0 g/10 min;
d) a density, determined according to ISO 1183, in the range from 907 to 929 $kg/m^3$, most preferably in the range from 913 to 923 $kg/m^3$;
e) a total comonomer content, determined by quantitative $^{13}C$-NMR spectroscopic analysis, in the range from 2.30 to 5.00 mol-%, more preferably in the range from 3.00 to 4.00 mol-%, most preferably in the range from 3.30 to 3.70 mol-%;
f) a 1-butene content, determined by quantitative $^{13}C$-NMR spectroscopic analysis, in the range from 0.30 to 1.00 mol-%, more preferably in the range from 0.40 to 0.90 mol-%, most preferably in the range from 0.50 to 0.80 mol-%; and
g) a 1-hexene content, determined by quantitative $^{13}C$-NMR spectroscopic analysis, in the range from 2.00 to 4.00 mol-%, more preferably in the range from 2.30 to 3.60 mol-%, most preferably in the range from 2.60 to 3.20 mol-%.

**5.** The multimodal polyethylene (PE) according to any one of the preceding claims, wherein the multimodal polyethylene (PE) comprises:

a) a first polyethylene fraction (PE1) comprising ethylene and a comonomer selected from the group consisting of $C_3$ to Cio alpha olefins and having a melt flow rate ($MFR_2$), determined according to ISO 1133 at a load of 2.16 kg and at a temperature of 190 °C, in the range from 0.01 to 2.00 g/10 min, more preferably in the range from 0.05 to 1.00 g/10 min, most preferably in the range from 0.10 to 0.50 g/10 min;
b) a second polyethylene fraction (PE2) comprising ethylene and a comonomer selected from the group consisting of $C_3$ to Cio alpha olefins and having a melt flow rate ($MFR_2$), determined according to ISO 1133 at a load of 2.16 kg and at a temperature of 190 °C, in the range from 20 to 300 g/10 min, more preferably in the range from 40 to 200 g/10 min, most preferably in the range from 60 to 150 g/10 min; and
c) a third polyethylene fraction (PE3) comprising ethylene and a comonomer selected from the group consisting of $C_3$ to Cio alpha olefins and having a melt flow rate ($MFR_2$), determined according to ISO 1133 at a load of 2.16 kg and at a temperature of 190 °C, in the range from 0.10 to 10.0 g/10 min, more preferably in the range from 0.30 to 5.0 g/10 min, most preferably in the range from 0.50 to 2.0 g/10 min,

wherein the ratio between the melt flow rates ($MFR_2$) of the second polyethylene fraction and the first polyethylene

fraction [$MFR_2$(PE2)/$MFR_2$(PE1)] is in the range from 70 to 2000, more preferably in the range from 100 to 1000, most preferably in the range from 200 to 800.

**6.** The multimodal polyethylene (PE) according to claim 5, fulfilling one or more, preferably all, of the following requirements:

a) the first polyethylene fraction (PE1) has a density, determined according to ISO 1183, in the range from 910 to 945 kg/$m^3$, more preferably in the range from 917 to 939 kg/$m^3$, most preferably in the range from 923 to 933 kg/$m^3$;
b) the second polyethylene fraction (PE2) has a density, determined according to ISO 1183, in the range from 930 to 965 kg/$m^3$, more preferably in the range from 940 to 960 kg/$m^3$, most preferably in the range from 945 to 955 kg/$m^3$; and
c) the third polyethylene fraction (PE3) has a density, determined according to ISO 1183, in the range from 890 to 920 kg/$m^3$, more preferably in the range from 894 to 914 kg/$m^3$, most preferably in the range from 898 to 908 kg/$m^3$.

**7.** The multimodal polyethylene (PE) according to claim 5 or claim 6, wherein:

a) the first polyethylene fraction (PE1) is a copolymer of ethylene and 1-butene;
b) the second polyethylene fraction (PE2) is a copolymer of ethylene and 1-butene; and
c) the third polyethylene fraction (PE3) is a copolymer of ethylene and 1-hexene.

**8.** The multimodal polyethylene (PE) according to any one of claims 5 to 7, fulfilling one or more, preferably all, of the following requirements:

a) the first polyethylene fraction (PE1) has a 1-butene content, determined by quantitative $^{13}C$-NMR spectroscopic analysis, in the range from 0.30 to 2.00 mol-%, more preferably in the range from 0.50 to 1.50 mol-%, most preferably in the range from 0.70 to 1.30 mol-%;
b) the second polyethylene fraction (PE2) has a 1-butene content, determined by quantitative $^{13}C$-NMR spectroscopic analysis, in the range from 1.00 to 4.00 mol-%, more preferably in the range from 1.50 to 3.00 mol-%, most preferably in the range from 1.90 to 2.40 mol-%; and
c) the third polyethylene fraction (PE3) has a 1-hexene content, determined by quantitative $^{13}C$-NMR spectroscopic analysis, in the range from 3.00 to 7.00 mol-%, more preferably in the range from 4.00 to 6.00 mol-%, most preferably in the range from 4.50 to 5.50 mol-%.

**9.** The multimodal polyethylene (PE) according to any one of claims 5 to 8, wherein:

a) the first polyethylene fraction (PE1) is present in an amount in the range from 10.0 to 30.0 wt.-%, more preferably in the range from 14.0 to 26.0 wt.-%, most preferably in the range from 17.0 to 22.0 wt.-%, relative to the total weight of the multimodal polyethylene (PE);
b) the second polyethylene fraction (PE2) is present in an amount in the range from 10.0 to 30.0 wt.-%, more preferably in the range from 15.0 to 27.0 wt.-%, most preferably in the range from 19.0 to 24.0 wt.-%, relative to the total weight of the multimodal polyethylene (PE); and
c) the third polyethylene fraction (PE3) is present in an amount in the range from 40.0 to 80.0 wt.-%, more preferably in the range from 47.0 to 71.0 wt.-%, most preferably in the range from 54.0 to 64.0 wt.-%, relative to the total weight of the multimodal polyethylene (PE).

**10.** The multimodal polyethylene (PE) according to any one of claims 5 to 9, wherein the combination of the first polyethylene fraction (PE1) and the second polyethylene fraction (PE2) fulfils one or more, preferably all, of the following properties:

a) a number average molecular weight (Mn), determined according to the method given in the measurement methods, of at most 12.0 kg/mol, more preferably at most 10.0 kg/mol, most preferably at most 8.0 kg/mol;
b) a weight average molecular weight (Mw), determined according to the method given in the measurement methods, in the range from 40.0 to 110.0 kg/mol, more preferably in the range from 50.0 to 90.0 kg/mol, most preferably in the range from 60.0 to 75.0 kg/mol; and
c) a molecular weight distribution (Mw/Mn), determined according to the method given in the measurement methods, in the range from 6.0 to 20.0, more preferably in the range from 8.0 to 17.0, most preferably in the range

from 10.0 to 15.0.

**11.** The multimodal polyethylene (PE) according to any one of the preceding claims, having one or more, preferably all, of the following properties:

a) a dart drop impact strength (DDI), determined according to ISO 7765-1 on a 20 μm blown film specimen, in the range from 300 to 1000 g, more preferably in the range from 400 to 900 g, most preferably in the range from 450 to 800 g;
b) a dart drop impact strength (DDI), determined according to ISO 7765-1 on a 20 μm blown film specimen, in the range from 15 to 50 g/μm, more preferably in the range from 20 to 45 g/μm, most preferably in the range from 23 to 40 g/μm;
c) a tensile modulus in the machine direction (TM-MD), determined according to ISO 527-3 on a 20 μm blown film specimen, in the range from 100 to 300 MPa, more preferably in the range from 140 to 260 MPa, most preferably in the range from 180 to 220 MPa;
d) a tensile modulus in the transverse direction (TM-TD), determined according to ISO 527-3 on a 20 μm blown film specimen, in the range from 100 to 300 MPa, more preferably in the range from 140 to 260 MPa, most preferably in the range from 195 to 235 MPa;
e) a haze value, determined according to ASTM D1003 on a 20 μm blown film specimen, in the range from 0.0 to 20.0%, more preferably in the range from 0.0 to 17.0%, most preferably in the range from 0.0 to 14.0%;
f) a relative tear resistance in the machine direction (Tear-MD), determined according to ISO 6383-2 on a 20 μm blown film specimen, in the range from 90 to 200 N/mm, more preferably in the range from 95 to 150 N/mm, most preferably in the range from 100 to 120 N/mm; and
g) a relative tear resistance in the transverse direction (Tear-TD), determined according to ISO 6383-2 on a 20 μm blown film specimen, in the range from 150 to 300 N/mm, more preferably in the range from 180 to 270 N/mm, most preferably in the range from 200 to 250 N/mm.

**12.** A process for producing the multimodal polyethylene (PE) according to any one of the preceding claims, comprising the following steps in the given order:

a) providing a single site catalyst (SSC);
b) optionally prepolymerizing the single site catalyst (SSC) in the presence of ethylene and optionally one or more comonomers selected from the group consisting of $C_3$-$C_{10}$ alpha olefins in a prepolymerization reactor (R0), thereby producing a prepolymerized single site catalyst (SSC);
c) in the presence of the optionally prepolymerized single site catalyst (SSC), polymerizing ethylene and one or more comonomers selected from the group consisting of $C_3$-$C_{10}$ alpha olefins in a first polymerization reactor (R1), thereby producing the first polyethylene fraction (PE1);
d) in the presence of the single site catalyst (SSC) and the first polyethylene fraction (PE1), polymerizing ethylene and one or more comonomers selected from the group consisting of $C_3$-$C_{10}$ alpha olefins in a second polymerization reactor (R2), thereby producing the second polyethylene fraction (PE2);
e) in the presence of the single site catalyst (SSC), the first polyethylene fraction (PE1), and the second polyethylene fraction (PE2), polymerizing ethylene and one or more comonomers selected from the group consisting of $C_3$-$C_{10}$ alpha olefins in a third polymerization reactor (R3), thereby producing the third polyethylene fraction (PE3); and
f) compounding the resultant mixture of the single site catalyst (SSC), the first polyethylene fraction (PE1), the second polyethylene fraction (PE2) and the third polyethylene fraction (PE3), optionally with one or more additives (Ad), thereby obtaining the multimodal polyethylene (PE),

wherein the first polymerization reactor (R1) and the second polymerization reactor (R2) are preferably slurry reactors, more preferably loop reactors, and the third polymerization reactor (R3) is preferably a gas phase reactor.

**13.** The multimodal polyethylene (PE) according to any one of claims 1 to 11 being obtainable, more preferably obtained, according to the process of claim 12.

**14.** A film (F), preferably a blown film (BF), comprising at least 75 wt.-% of the multimodal polyethylene (PE) according to claims 1 to 11 or 13.

**15.** The film (F), preferably the blown film (BF), according to claim 14, having one or more, preferably all, of the following properties:

a) a dart drop impact strength (DDI), determined according to ISO 7765-1, in the range from 300 to 1000 g, more preferably in the range from 400 to 900 g, most preferably in the range from 450 to 800 g;
b) a dart drop impact strength (DDI), determined according to ISO 7765-1, in the range from 15 to 50 g/μm, more preferably in the range from 20 to 45 g/μm, most preferably in the range from 23 to 40 g/μm;
c) a tensile modulus in the machine direction (TM-MD), determined according to ISO 527-3, in the range from 100 to 300 MPa, more preferably in the range from 140 to 260 MPa, most preferably in the range from 180 to 220 MPa;
d) a tensile modulus in the transverse direction (TM-TD), determined according to ISO 527-3, in the range from 100 to 300 MPa, more preferably in the range from 140 to 260 MPa, most preferably in the range from 195 to 235 MPa;
e) a haze value, determined according to ASTM D1003, in the range from 0.0 to 20.0%, more preferably in the range from 0.0 to 17.0%, most preferably in the range from 0.0 to 14.0%;
f) a relative tear resistance in the machine direction (Tear-MD), determined according to ISO 6383-2, in the range from 90 to 200 N/mm, more preferably in the range from 95 to 150 N/mm, most preferably in the range from 100 to 120 N/mm; and
g) a relative tear resistance in the transverse direction (Tear-TD), determined according to ISO 6383-2, in the range from 150 to 300 N/mm, more preferably in the range from 180 to 270 N/mm, most preferably in the range from 200 to 250 N/mm.

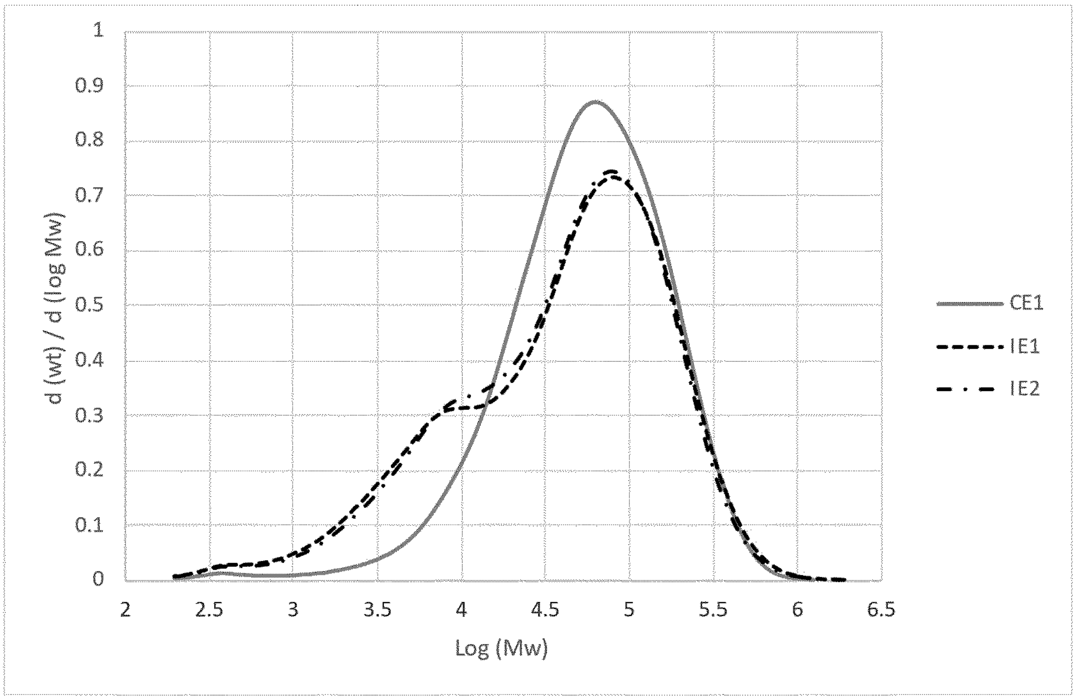


**Figure 1** **Molecular weight distribution of**

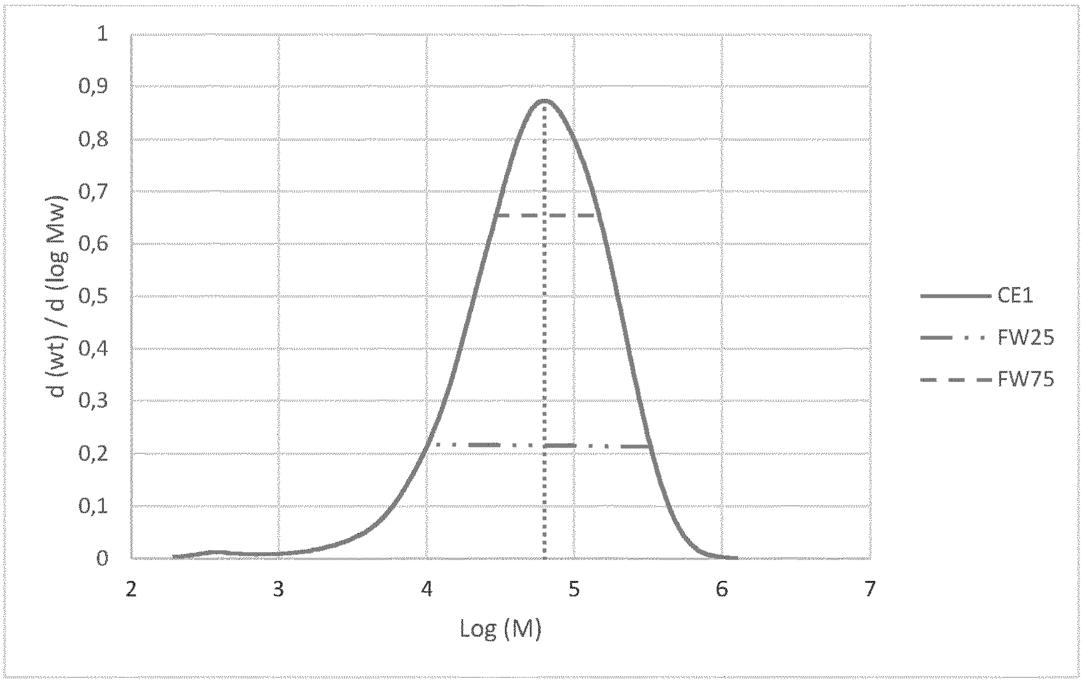


**Figure 2** FW25M and FW75M of CE1

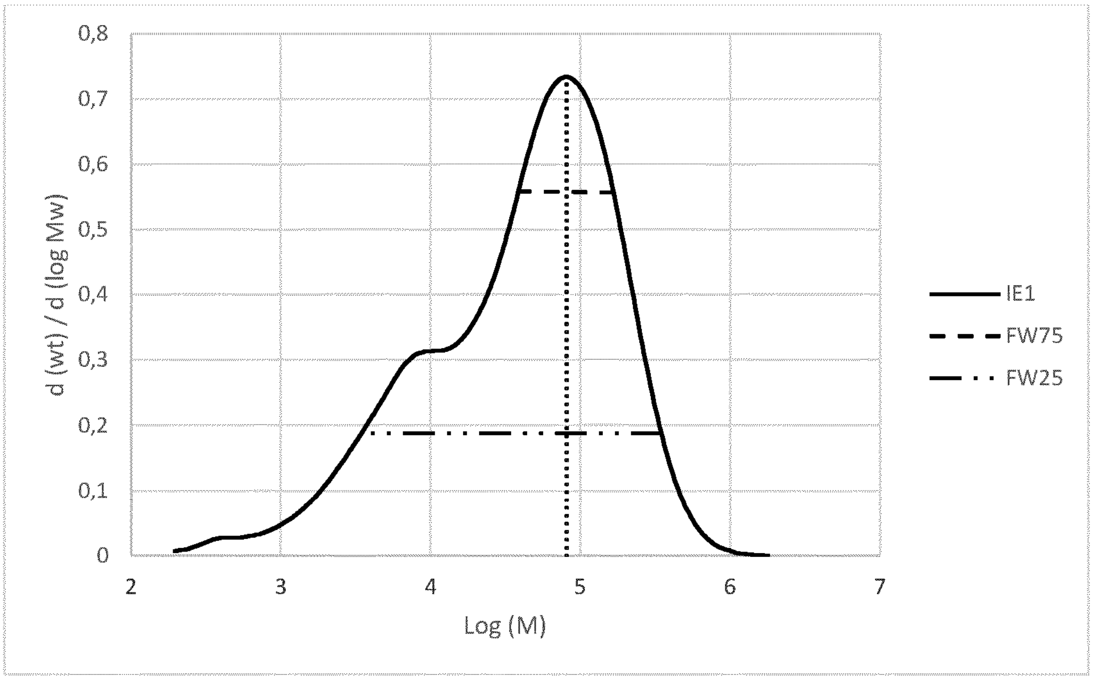


**Figure 3** FW25M and FW75M of IE1

Europäisches Patentamt
European Patent Office
Office européen des brevets

# EUROPEAN SEARCH REPORT

Application Number
EP 25 15 4915

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/268966 A1 (BOREALIS AG [AT]) 29 December 2022 (2022-12-29) * claim 1; example IE1; table 2 * ----- | 1-15 | INV. C08F210/16 C08F4/659 C08L23/0807 |
| X | WO 2024/003206 A1 (BOREALIS AG [AT]) 4 January 2024 (2024-01-04) * claims 1, 3, 4, 6; examples IE1-3; table 2 * ----- | 1-15 | |
| X | WO 2023/057479 A1 (BOREALIS AG [AT]) 13 April 2023 (2023-04-13) * claim 1; examples LLDPE-3; table 3 * ----- | 1-15 | |
| X | WO 2005/002744 A1 (BOREALIS TECH OY [FI]; LEHTINEN ARJA [FI] ET AL.) 13 January 2005 (2005-01-13) * claim 4; example 1; table 2 * ----- | 1-11, 13-15 | |

TECHNICAL FIELDS SEARCHED (IPC)

C08F

The present search report has been drawn up for all claims

2

| Place of search | Date of completion of the search | Examiner |
|---|---|---|
| Munich | 10 July 2025 | Bernhardt, Max |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 25 15 4915

This annex lists the patent family members relating to the patent documents cited in the above-mentioned European search report. The members are as contained in the European Patent Office EDP file on
The European Patent Office is in no way liable for these particulars which are merely given for the purpose of information.

10-07-2025

| Patent document cited in search report | Publication date | Patent family member(s) | Publication date |
|---|---|---|---|
| WO 2022268966 A1 | 29-12-2022 | CN 117642281 A | 01-03-2024 |
| | | EP 4108436 A1 | 28-12-2022 |
| | | ES 2982100 T3 | 14-10-2024 |
| | | US 2024287224 A1 | 29-08-2024 |
| | | WO 2022268966 A1 | 29-12-2022 |
| WO 2024003206 A1 | 04-01-2024 | CN 119497726 A | 21-02-2025 |
| | | EP 4547723 A1 | 07-05-2025 |
| | | KR 20250031209 A | 06-03-2025 |
| | | WO 2024003206 A1 | 04-01-2024 |
| WO 2023057479 A1 | 13-04-2023 | CN 118076690 A | 24-05-2024 |
| | | EP 4163334 A1 | 12-04-2023 |
| | | WO 2023057479 A1 | 13-04-2023 |
| WO 2005002744 A1 | 13-01-2005 | AT E350173 T1 | 15-01-2007 |
| | | BR PI0412018 A | 15-08-2006 |
| | | CA 2530361 A1 | 13-01-2005 |
| | | CN 1816399 A | 09-08-2006 |
| | | DE 602004004132 T2 | 15-11-2007 |
| | | EA 200600017 A1 | 25-08-2006 |
| | | EP 1638695 A1 | 29-03-2006 |
| | | ES 2279389 T3 | 16-08-2007 |
| | | JP 2009513377 A | 02-04-2009 |
| | | KR 20060027823 A | 28-03-2006 |
| | | PL 1638695 T3 | 29-06-2007 |
| | | US 2006177675 A1 | 10-08-2006 |
| | | WO 2005002744 A1 | 13-01-2005 |
| | | ZA 200600648 B | 25-04-2007 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2023012254 A1
- WO 2012012256 A1
- WO 2021191019 A1


### Non-patent literature cited in the description


- **KLIMKE, K.** ; **PARKINSON, M.** ; **PIEL, C.** ; **KAMINSKY, W.** ; **SPIESS, H.W.** ; **WILHELM, M.** *Macromol. Chem. Phys.*, 2006, vol. 207, 382
- **PARKINSON, M.** ; **KLIMKE, K.** ; **SPIESS, H.W.** ; **WILHELM, M.** *Macromol. Chem. Phys.*, 2007, vol. 208, 2128
- **POLLARD, M.** ; **KLIMKE, K.** ; **GRAF, R.** ; **SPIESS, H.W.** ; **WILHELM, M.** ; **SPERBER, O.** ; **PIEL, C.** ; **KAMINSKY, W.** *Macromolecules*, 2004, vol. 37, 813
- **FILIP, X.** ; **TRIPON, C.** ; **FILIP, C.** *J. Mag. Resn.*, 2005, vol. 176, 239
- **GRIFFIN, J.M.** ; **TRIPON, C.** ; **SAMOSON, A.** ; **FILIP, C.** ; **BROWN, S.P.** *Mag. Res. in Chem.*, 2007, vol. 45, S1, S198
- **CASTIGNOLLES, P.** ; **GRAF, R.** ; **PARKINSON, M.** ; **WILHELM, M.** ; **GABORIEAU, M.** *Polymer*, 2009, vol. 50, 2373
- **BUSICO, V.** ; **CIPULLO, R.** *Prog. Polym. Sci.*, vol. 26 (2001), 443
- **BUSICO, V.** ; **CIPULLO, R.** ; **MONACO, G.** ; **VACATELLO, M.** ; **SEGRE, A.L.** *Macromoleucles*, 1997, vol. 30, 6251
- **ZHOU, Z.** ; **KUEMMERLE, R.** ; **QIU, X.** ; **REDWINE, D.** ; **CONG, R.** ; **TAHA, A.** ; **BAUGH, D.** ; **WINNIFORD, B.** *J. Mag. Reson.*, 2007, vol. 187, 225
- **BUSICO, V.** ; **CARBONNIERE, P.** ; **CIPULLO, R.** ; **PELLECCHIA, R.** ; **SEVERN, J.** ; **TALARICO, G.** *Macromol. Rapid Commun.*, 2007, vol. 28, 1128
- **RESCONI, L.** ; **CAVALLO, L.** ; **FAIT, A.** ; **PIEMONTESI, F.** *Chem. Rev.*, 2000, vol. 100, 1253